Europäisches Patentamt

(19) European Patent Office

Office européen des brevets

(11) EP 0 800 061 A2

(12) EUROPEAN PATENT APPLICATION

(43) Date of publication:
08.10.1997 Bulletin 1997/41

(51) Int. Cl.$^6$: G01F 1/32

(21) Application number: 97104185.0

(22) Date of filing: 12.03.1997

(84) Designated Contracting States:
DE FR GB NL

(30) Priority: 02.04.1996 JP 80094/96
03.07.1996 JP 173123/96

(71) Applicant: Yokogawa Electric Corporation
Tokyo 180 (JP)

(72) Inventors:
• Tetsuo, Andoh
Tokyo 177 (JP)
• Matsunaga, Yoshinori
Kodaira-shi, Tokyo 187 (JP)

• Kawano, Takashi
Yokohama-shi, Kanagawa 244 (JP)
• Hondo, Masanori
Musashino-shi, Tokyo 180 (JP)
• Wada, Masami
Musashino-shi, Tokyo 180 (JP)
• Nagata, Kazuo
Kodaira-shi, Tokyo 187 (JP)

(74) Representative: Henkel, Feiler, Hänzel & Partner
Möhlstrasse 37
81675 München (DE)

(54) Vortex flowmeter

(57) The present invention relates to a vortex flowmeter which is configured to calculate the flowrate of a measuring fluid flowing through a flow path using ultrasonic signals subjected to changes in the propagation time due to Karman vortices, provided with a reference signal generation means outputting a plurality of reference signals of different phases, a signal analyzing means to output an input status signal by determining the relationship between the phases of the above ultrasonic signals and each reference signal above, a plurality of the phase-detection means to output phase signals by detecting the phase differences between the above ultrasonic signals and the above reference signals, and a channel-selection means to select the above optimum phase signal using the above input status signals and to output it as the selection signal, and which computes and outputs the flowrate signals using the above selected phase signal. In such a manner, the vortices can be stably detected even if a phase change due to the vortices in vortex flowmeters is large.

Fig.3

EP 0 800 061 A2

## Description

## Background of the Invention

### Field of the Invention:

The present invention relates to a vortex flowmeter which calculates the flowrate of a measuring fluid flowing through a flow path, using ultrasonic signals whose propagation time is changed with Karman vortices, and more particularly to a vortex flowmeter which is improved so that vortices can be detected in a stable manner even if phase changes due to the vortices are large.

### Description of the Prior Art:

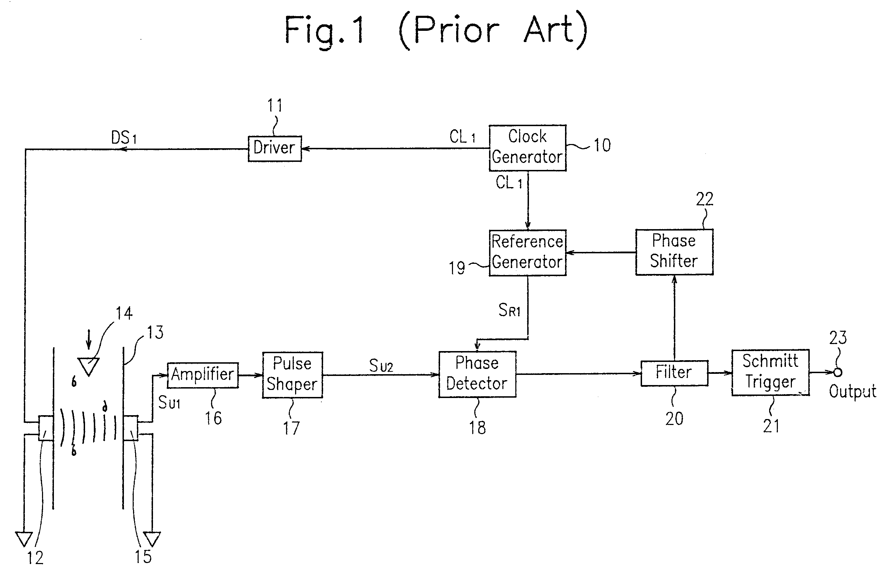

Figure 1 shows a configuration of a vortex flowmeter in the prior art. The figure shows a configuration of a vortex flowmeter which calculates the flowrate of a measuring fluid by detecting changes in the propagation time obtained by emitting ultrasonic waves as a continuous wave to the vortices.

By sending the reference clock $CL_1$ from clock generator 10 to driver 11, driver 11 transmits drive signals $DS_1$ of a frequency higher than the Karman vortex frequency in synchronization with reference clock $CL_1$ to ultrasonic transmitter 12.

This ultrasonic transmitter 12 is located on the downstream side of vortex shedder 14 fixed in metering pipe 13 and fixed to the pipe wall perpendicular to both vortex shedder 14 and the axis of pipe 13. Ultrasonic receiver 15 is fixed to the pipe wall opposite ultrasonic transmitter 12.

Drive signal $DS_1$ causes ultrasonic transmitter 12 to emit ultrasonic waves into the measuring fluid, and ultrasonic waves modulated by the velocity component of the Karman vortex in the direction connecting ultrasonic transmitter 12 and ultrasonic receiver 15 are received with ultrasonic receiver 15, and then are output as ultrasonic signals $S_{U1}$ to amplifier 16. Ultrasonic signals $S_{U1}$ are further output to phase detector 18 as ultrasonic signals $S_{U2}$ converted to pulses in pulse shaper 17.

At the same time, reference clock $CL_1$ is applied to reference generator 19 from clock generator 10, and in synchronization with this clock, reference signals $S_{R1}$ are output to phase detector 18 from reference generator 19. Thus, phase detector 18 performs a phase-sensitive-detection of ultrasonic signals $S_{U2}$ taking reference signals $S_{R1}$ as the reference to output them to filter 20.

Filter 20 sends out filtered signals to Schmitt trigger 21 as well as to phase shifter 22. Phase shifter 22 controls reference generator 19 so that the generator outputs reference signal $S_{R1}$ whose phases are shifted by $\pi$ depending on the initial phase value to phase detector 18.

Schmitt trigger 21 outputs the vortex waveforms which are reproduced from the Karman vortices obtained at the output terminal of filter 20 to output terminal 23 taking a predetermined threshold value as the reference.

In the following, the above description is explained in more detail using numerical expressions. The propagation time T of ultrasonic signals $S_{U1}$ is expressed as a function of time t as follows:

$$T = D/[C - V_V \sin(2\pi f_V \cdot t)] \qquad (1)$$

where the velocity of sound in the measuring fluid is assumed to be C, the velocity of the vortex circulation flow assumed to be $V_V$, the vortex frequency $f_V$, and the diameter (size) of metering pipe 13 D, respectively.

Also, if the frequency of ultrasonic signals $S_{U1}$ are allowed to be $f_S$, phase $\Phi$) between ultrasonic signals $S_{U1}$ and reference signals $S_{R1}$ is as follows:

$$\Phi = 2\pi f_S D/[C - V_V \sin(2\pi f_V \cdot t)] \qquad (2)$$
$$\cong 2\pi f_S D/C + 2\pi f_S D V_V \sin(2\pi f_V \cdot t)/C^2$$

The first term in equation (2) represents the initial phase and the second term, the phase shift due to the vortices, respectively. Here, although the initial phase changes because sound velocity C varies due to a temperature change in the measuring fluid and the like, since this phase shift is very slow compared with that due to the vortices, it may be considered to be approximately constant. For this reason, the shift in phase $\Phi$ can be measured with phase detector 18 and, thus, the vortices can be reproduced by filter 20.

In this case, since the phase change due to the vortices, even if it is small, readily exceeds the processing range of phase detector 18 if the initial phase is in the vicinity of 0 or $2\pi$, the reference signals are switched to another reference signals whose phase is different by $\pi$ from the present reference signals by the constant initial phase value in phase shifter 22 to bring it into the processing range of phase detector 18.

Since the vortices are reproduced in an analog manner by the output of filter 20, if the phase change due to the vortices is small, pulsive vortex signals can be reproduced at output terminal 23 by converting the output of filter 20 to pulses with Schmitt trigger 21.

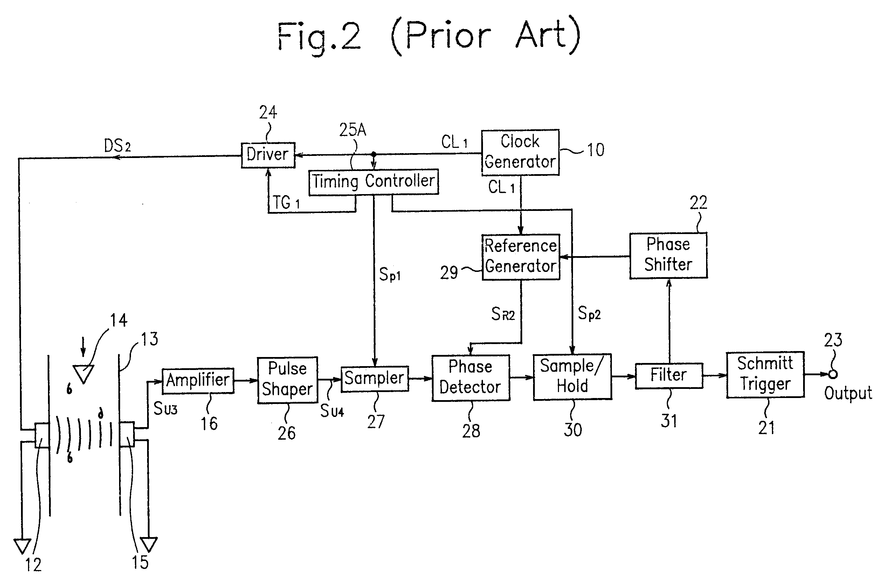

Figure 2 shows a configuration of another vortex flowmeter in the prior art. In the case of Figure 2, the configuration of a vortex flowmeter is shown, which calculates the flowrate of the measuring fluid by detecting a change in the propagation time obtained by emitting ultrasonic waves into vortices as burst waves. In the following description, parts having the same functions as those shown in Figure 1 are given the same numbers and their description will be properly omitted.

Clock generator 10 outputs reference clock $CL_1$ to driver 24 and timing controller 25A respectively. Timing controller 25A outputs timing signals $TG_1$ which cause driver 24 to send ultrasonic waves as bursts. In addition, timing controller 25A sends out timing signals $S_{P2}$ for sample/hold and other. Driver 24 applies drive signals $DS_2$ in the form of bursts to ultrasonic transmitter 12 controlled by timing signals $TG_1$. Owing to these drive signals $DS_2$, the piezo-electric element of ultrasonic transmitter 12 causes voltage/strain conversion and sends out ultrasonic waves into the measuring fluid. These drive signals $DS_2$ are sent out in bursts, the repetition cycle of a burst being set shorter than the vortex generation cycle from the necessity of restoring the vortex signals.

Ultrasonic transmitter 12 emits ultrasonic waves inside metering pipe 13 by the application of drive signals $DS_2$ in the form of bursts, and the ultrasonic waves are received by ultrasonic receiver 15 after being subjected to phase modulation with Karman vortices, and then output to amplifier 16 as ultrasonic signals $S_{U3}$. Further, ultrasonic signals $S_{U3}$ are converted to pulses using a predetermined threshold as a reference in pulse shaper 26 and output to sampler 27 as pulsed ultrasonic signals $S_{U4}$.

To sampler 27, a sampling signal $S_{P1}$ is repeatedly delayed for a predetermined time for a burst being sent from timing controller 25A. By these sampling signals $S_{P1}$, ultrasonic signal $S_{U4}$ is sampled each time and output to phase detector 28.

At the same time, to reference generator 29, reference clock $CL_1$ is applied from clock generator 10 and reference signal $S_{R2}$ is output from reference generator 29 to phase detector 28 delayed for a predetermined time for a burst being sent. Then, phase detector 28 carries out phase-sensitive detection on the ultrasonic signals output from sampler 27 taking reference signals $S_{R2}$ as the base, and outputs the ultrasonic signals to sample/hold 30. Sample/hold 30 samples the output of phase detector 28 using sampling signals $S_{P2}$ sent out from timing controller 25 and outputs them to filter 31.

Filter 31 sends out filtered signals to Schmitt trigger 21 as well as signals to phase shifter 22. Phase shifter 22 controls reference generator 29 so that the generator outputs reference signal $S_{R2}$ whose phase is different from the other reference signal by $\pi$ depending on the initial phase value to phase detector 28.

Schmitt trigger 21 outputs vortex waves reproducing Karman vortices obtained at the output terminal of filter 31 to output terminal 23 as pulse waves taking a predetermined threshold as a reference.

As shown in Figure 2, if the vortices are restored using burst waves, this configuration has the advantage of being able to separate and reject noise that reaches ultrasonic receiver 15 via metallic metering pipe 13 in sending out ultrasonic waves into the measuring fluid from ultrasonic transmitter 12, because sending and receiving ultrasonic waves become intermittent compared with the restoration of vortices using the continuous waves shown in Figure 1.

In the cases of restoring vortices using the continuous waves shown in Figure 1 and using the burst waves shown in Figure 2, restoration functions effectively if ultrasonic wave phase changes due to the vortices are small in both cases. However, for example, if the pipe size is larger, the flow velocity is faster, or the sound velocity is slower, ultrasonic wave phase changes due to the vortices readily exceed the 0 to $2\pi$ range and the system becomes inoperable.

If the initial phase is in the vicinity of 0 or $2\pi$, since the phase change due to the vortices, even if it is small, readily exceeds the processing range of the phase detector, phase shifter 22 is provided to avoid exceeding the range. However, since such phase shifter 22 only switches reference signals whose phases are different by $\pi$ depending on the constant value of the initial phase, it does not function for an AC-like phase change due to the vortices and so does not solve problems in the case of large phase changes.

Even though, to override these faults, lowering of the ultrasonic frequency can be considered, if this is done, a problem occurs where ultrasonic wave absorption and scattering increases when air bubbles contained in the measuring fluid pass by and, thus, the ultrasonic waves do not reach the ultrasonic receiver properly.

## Summary of the Invention

The present invention relates to a vortex flowmeter which is configured to calculate the flowrate of a measuring fluid flowing through a flow path using ultrasonic signals subjected to a change in the propagation time due to Karman vortices, provided with a reference signal generation means to output a plurality of reference signals of different phases, a signal analyzing means to output an input status signal by determining the relationship between the phases of the above ultrasonic signals and each reference signal above, a plurality of phase detection means to output phase signals by detecting phase differences between the above ultrasonic signals and the above reference signals, and a channel selection means to select the above optimum phase signal using the above input status signals and output it as the selected signal, and which computes and outputs the flowrate signals using the above selected phase signal.

## Brief Description of the Drawings

Figure 1 shows a configuration of a vortex flowmeter in the prior art using continuous waves.

Figure 2 shows a configuration of a vortex flowmeter in the prior art using burst waves.

Figure 3 shows a configuration which indicates the preferred embodiment of the present invention.

Figure 4 is a waveform diagram illustrating signal sampling actions in the embodiment shown in Figure 3.

Figure 5 is a waveform diagram illustrating the reference signals in the embodiment shown in Figure 3.

Figure 6 is a waveform diagram illustrating the phase signals in the embodiment shown in Figure 3.

Figure 7 shows the input-output characteristics of the phase detectors shown in Figure 3.

Figure 8 is a waveform diagram illustrating the signal processing if a phase change due to vortices in the embodiment shown in Figure 3 is small.

Figure 9 is a waveform diagram illustrating the signal processing if a phase change due to vortices in the embodiment shown in Figure 3 is large.

Figure 10 shows a configuration to indicate in detail the internal configuration for the signal analyzer shown in Figure 3.

Figure 11 shows a configuration to indicate in detail the internal configuration for the channel selector shown in Figure 3.

Figure 12 is a waveform diagram illustrating operation of the signal analyzer shown in Figure 10.

Figure 13 is a selection diagram illustrating operation of the channel selector shown in Figure 11.

Figure 14 is a flow chart illustrating operation of the channel selector shown in Figure 11.

Figure 15 shows a configuration for the second embodiment of the present invention different from the embodiment shown in Figure 3.

Figure 16 shows a configuration for the third embodiment of the present invention different from the embodiment shown in Figure 3.

Figure 17 shows a configuration for the fourth embodiment of the present invention different from the embodiment shown in Figure 3.

Figure 18 shows a configuration for the fifth embodiment of the present invention different from the embodiment shown in Figure 3.

Figure 19 is a waveform diagram obtained when ultrasonic waves are received in a different form from that shown in Figure 3.

Figure 20 is a block diagram for the entire configuration for an embodiment in which the effect of sound velocity is removed for the embodiment shown in Figure 3.

Figure 21 is a block diagram indicating a tangible configuration for the timing controller shown in Figure 20.

Figure 22 is a timing diagram illustrating operation in the embodiment shown in Figure 20.

Figure 23 shows an entire configuration in which vortex signal waveform shaping is executed for every size of metering pipe for the configuration shown in Figure 20.

Figure 24 is a block diagram indicating a tangible configuration for the filter in the configuration shown in Figure 23.

Figure 25 is a characteristic diagram illustrating operation of the filter shown in Figure 24.

Figure 26 is a characteristic diagram representing the relationship between the flow velocity and the phase demodulation signal of the filter shown in Figure 24.

Figure 27 shows an entire configuration for the embodiment obtained by improving a part of that shown in Figure 23.

Figure 28 shows a tangible configuration for the filter obtained by improving a part of that shown in Figure 24.

Figure 29 is a waveform diagram illustrating operation of the filter shown in Figure 28.

Figure 30 is a waveform diagram illustrating an example of problems generated by the special circumstance in the configuration shown in Figure 20.

Figure 31 shows an entire configuration for the embodiment improved to solve the problems described for the configuration shown in Figure 20.

Figure 32 is a flow chart to show a computation flow executed in the configuration shown in Figure 31.

Figure 33 is an illustration that describes the ultrasonic signals having missing pulses in the configuration shown in Figure 20.

Figure 34 is a block diagram for the entire configuration to solve the problems shown in Figure 33.

Figure 35 shows the filter configuration of Figure 24 part of which has been changed.

Figure 36 shows a characteristic diagram illustrating operation of the filter shown in Figure 35 and the like.

**Description of the Preferred Embodiment**

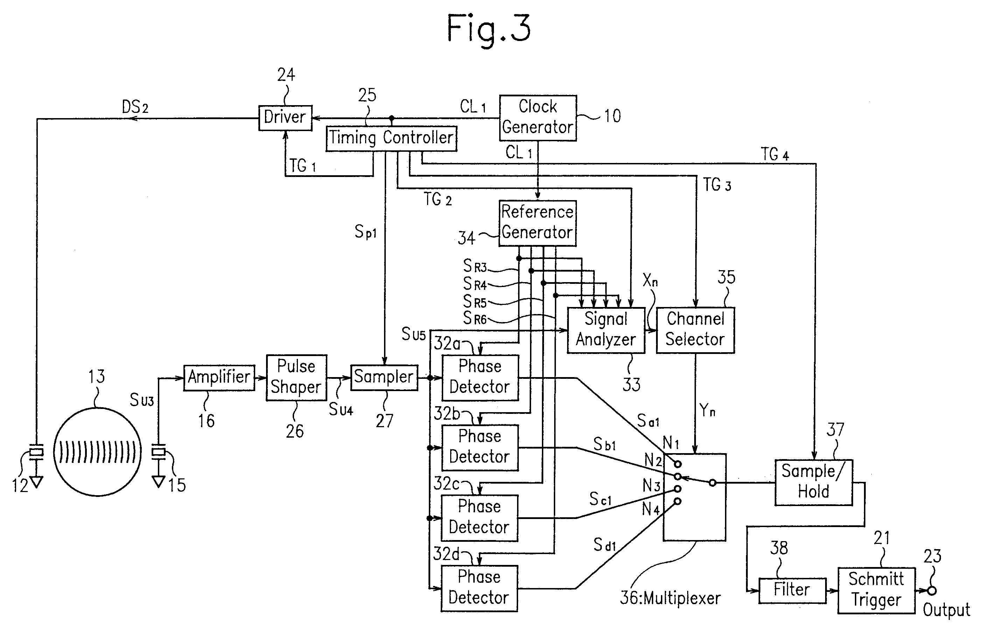

In the following, the embodiments of the present invention will be described in detail using the above drawings. Figure 3 shows a block diagram for a configuration which indicates the preferred embodiment of the present invention. Those parts having the same functions as those vortex flowmeters in the prior art shown in Figure 1 and Figure 2 are given the same numbers and their description will be properly omitted.

Clock generator 10 outputs reference clock $CL_1$ to driver 24 and timing controller 25 respectively Timing controller 25 outputs timing signals $TG_1$ to driver 24 to cause it to send out burst waves. Timing controller 25 also outputs timing signals to other blocks, e.g., timing signal $TG_2$ for an input decision, timing signal $TG_3$ for channel selection, timing signal $TG_4$ for sample/hold, etc.

Driver 24 applies drive signals $DS_2$ to ultrasonic transmitter 12 in the form of burst waves controlled by timing signals $TG_1$. The piezo-electric element of ultrasonic transmitter 12 implements voltage/strain conversion by these drive signals $DS_2$ and sends out ultrasonic waves into the measuring fluid.

The configuration of metering pipe 13, ultrasonic transmitter 12 and ultrasonic receiver 15 in Figure 3 is represented by a view from the cross-section of the metering pipe, different from that shown in Figure 1, but both configurations are basically the same.

Ultrasonic waves emitted toward the Karman vortices in the measuring fluid from ultrasonic transmitter 12 are received with ultrasonic receiver 15 and output to amplifier 16 as ultrasonic signals $S_{U3}$. Ultrasonic signals $S_{U3}$ are output to sampler 27 as ultrasonic signals $S_{U4}$ converted to rectangular pulses taking a predetermined threshold as a reference in pulse shaper 26. Sampler 27 cuts out part of ultrasonic signals $S_{U4}$ at the time sampling signal $S_{P1}$ is output from timing controller 25 and outputs it to phase detectors 32a, 32b, 32c, and 32d and to signal analyzer 33 as ultrasonic signals $S_{U5}$.

Reference generator 34 generates four reference signals $S_{R3}$, $S_{R4}$, $S_{R5}$, and $S_{R6}$ whose phases are shifted by $\pi/2$ in turn by dividing the frequency of reference clock $CL_1$ output from clock generator 10.

Phase detector 32a detects the phase of ultrasonic signals $S_{U5}$ using reference signals $S_{R3}$ having phase 0, phase detector 32b, using reference signal $S_{R4}$ having phase $\pi/2$, phase detector 32c, using reference signals $S_{R5}$ having phase $\pi$, and phase detector 32d, using reference signal $S_{R6}$ having phase $3\pi/2$ respectively and they output pulse-width phase signals $S_{a1}$, $S_{b1}$, $S_{c1}$, and $S_{d1}$.

Signal analyzer 33 receives timing signal $TG_2$, determines the phase relationship of ultrasonic signals $S_{U5}$ to reference signals $S_{R3}$, $S_{R4}$, $S_{R5}$, and $S_{R6}$ and outputs the input status signal to channel selector 35 as phase pattern signal $X_n$.

Channel selector 35 receives timing signal $TG_3$, selects an optimum phase signal among phase signals $S_{a1}$, $S_{b1}$, $S_{c1}$, and $S_{d1}$ based on phase pattern signal $X_n$, and outputs this phase signal as selection signal $Y_n$. Multiplexer 36 selects one of the switches $N_1$, $N_2$, $N_3$, and $N_4$ corresponding to phase signals $S_{a1}$, $S_{b1}$, $S_{c1}$, and $S_{d1}$ using selection signal $Y_n$, and outputs the selected signal to sample/hold 37.

Sample/hold 37 suitably samples and holds the phase signal selected by timing signal $TG_4$ output from timing controller 25 until the next phase signal processing starts. Filter 38 restores the vortex signals by processing the waveforms of the sample-held phase signal and the restored vortex signals are converted to pulses at the predetermined threshold level in Schmitt trigger 21 and output to output terminal 23.

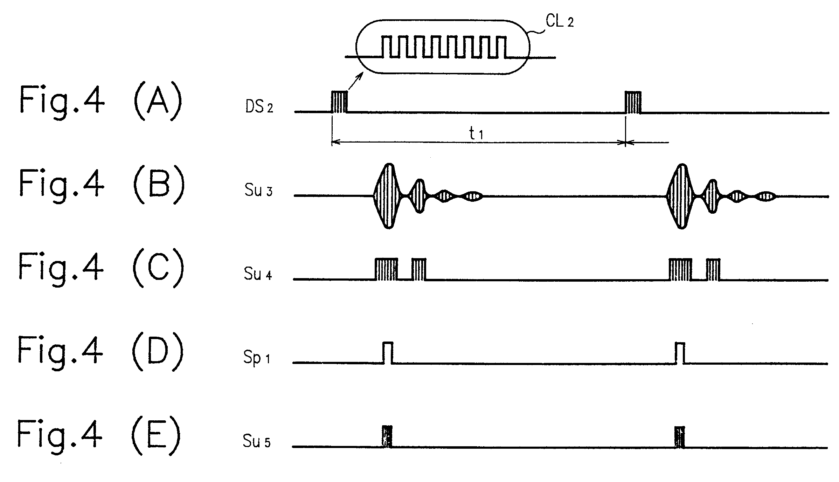

Next, an overview of the entire operation in the embodiment shown in Figure 3 will be described using a waveform diagram. Figure 4 (A) shows the waveform of drive signal $DS_2$ to be applied to ultrasonic transmitter 12 from driver 24. Driver 24 controls repetition cycle $t_1$ of the drive signal $DS_2$ burst waves by timing signal $TG_1$ and also creates clock $CL_2$ (Figure 4 (A)) obtained by frequency-dividing reference clock $CL_1$ by one-half. The burst wave repetition cycle $t_1$ is set shorter than the vortex generation cycle from the necessity of restoring the vortex signals, and clock $CL_2$ is employed as a clock frequency-divided into half of reference clock $CL_1$ for the reason of generating reference signals.

Ultrasonic transmitter 12 to which drive signal $DS_2$ is applied generates ultrasonic waves by converting the voltage to strain in its piezo-electric element and emits ultrasonic waves into the measuring fluid. The ultrasonic waves are then phase-modulated with Karman vortices shed in the measuring fluid and received with ultrasonic receiver 15, and are output to amplifier 16 as ultrasonic signal $S_{U3}$ (Figure 4 (B)). The waveform of ultrasonic signal $S_{U3}$ shown in Figure 4 (B) includes superimposed waveforms, such as those reflected a multiple number of times by metering pipe 13 and/or reverberation waves, in addition to the main waveform capturing Karman vortices. Ultrasonic signals $S_{U3}$ output via amplifier 16 are given to pulse shaper 26, converted to rectangular waves by the predetermined reference threshold, and output to sampler 27 as ultrasonic signals $SU_4$ (Figure 4 (C)).

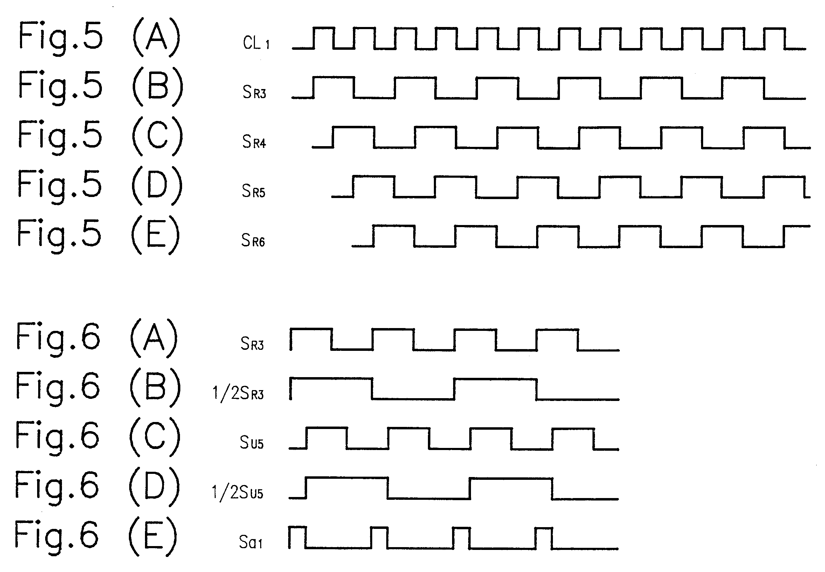

Sampling signals $S_{P1}$ (Figure 4 (D)) are output to sampler 27 at the predetermined time from timing controller 25 and sampler 27 samples ultrasonic signals $S_{U4}$ using these sampling signals $S_{P1}$ and outputs them as ultrasonic signals $S_{U5}$ (Figure 4 (E)). At the same time, reference generator 34, based on reference signal $S_{R3}$ (Figure 5 (B)) of phase 0, which is a clock obtained by frequency-dividing reference clock $CL_1$ (Figure 5 (A)) by one-half, generates reference signal $S_{R4}$ of phase $\pi/2$ (Figure 5 (C)), reference signal $S_{R5}$ of phase $\pi$ (Figure 5 (D)), and reference signal $S_{R6}$ of phase $3\pi/2$ (Figure 5 (E)) respectively by shifting the phase of signal $S_{R3}$ by $\pi/2$ in turn.

Reference signals $S_{R3}$, $S_{R4}$, $S_{R5}$, and $S_{R6}$ are applied to phase detectors 32a, 32b, 32c, and 32d respectively from reference generator 34. Since each phase detector operates similarly, being different only in phases shifted by $\pi/2$ in turn from reference signal $S_{R3}$ for phase 0, here the signal processing of reference signal $S_{R3}$ in phase detector 32a will be described using the waveform diagram shown in Figure 6.

Phase detector 32a generates reference signal (1/2) $S_{R3}$ (Figure 6 (B)) obtained by frequency-dividing reference signal $S_{R3}$ of phase 0 (Figure 6 (A)) by one-half shown in Figure 5 (B), and ultrasonic signal (1/2) $S_{U5}$ (Figure 6 (D)) obtained by frequency-dividing ultrasonic signal $S_{U5}$ (Figure 6 (C)) output from sampler 27. In addition, phase detector 32a computes the exclusive OR of reference signal (1/2) $S_{R3}$ and ultrasonic signal (1/2) $S_{U5}$ and outputs the computed result to multiplexer 36 as pulse-width modulated phase signal $S_{a1}$ (Figure 6 (E)).

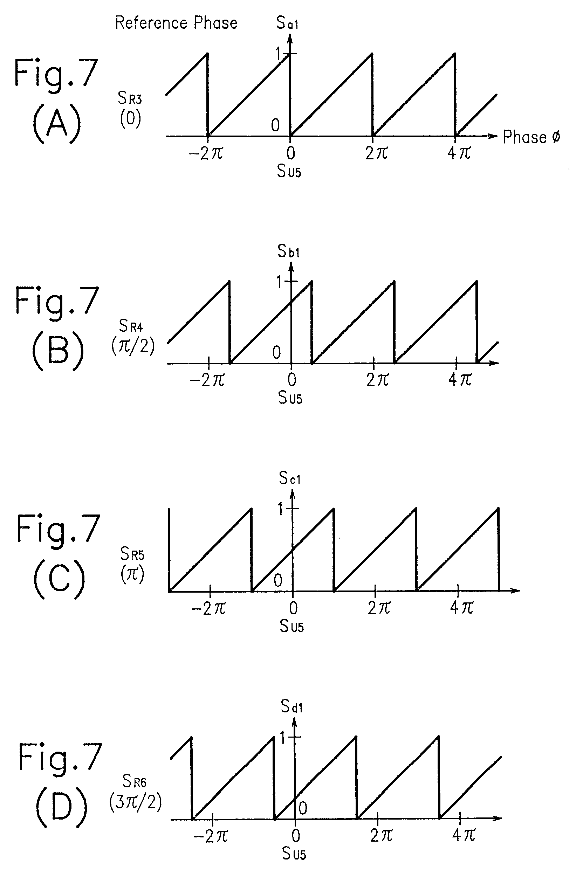

The input/output characteristic of phase detector 32a in this case for reference signal $S_{R3}$ of phase 0 is as shown in Figure 7 (A) corresponding to the phase of ultrasonic signal $S_{U5}$. In Figure 7 (A), the horizontal axis shows the phase of ultrasonic signal $S_{U5}$ and the vertical axis shows phase signal $S_{a1}$. The pulse width changes corresponding to the phase of ultrasonic signal $S_{U5}$ to reference signal $S_{R3}$ and output phase signal $S_{a1}$ (Figure 6 (E)) changes to the shape of the teeth of a saw.

In a similar manner, Figure 7 (B) represents the case of reference signal $S_{R4}$ of phase $\pi/2$ and the horizontal axis shows the phase of ultrasonic signal $S_{U5}$ and the vertical axis shows phase signal $S_{b1}$. Figure 7 (C) represents the case of reference signal $S_{R5}$ of phase $\pi$ and the horizontal axis shows the phase of reference signal $S_{U5}$ and the vertical axis shows phase signal $S_{c1}$. Figure 7 (D) represents the case of reference signal $S_{R6}$ of phase $3\pi/2$ and the horizontal axis shows the phase of reference signal $S_{U5}$ and the vertical axis shows phase signal $S_{d1}$.

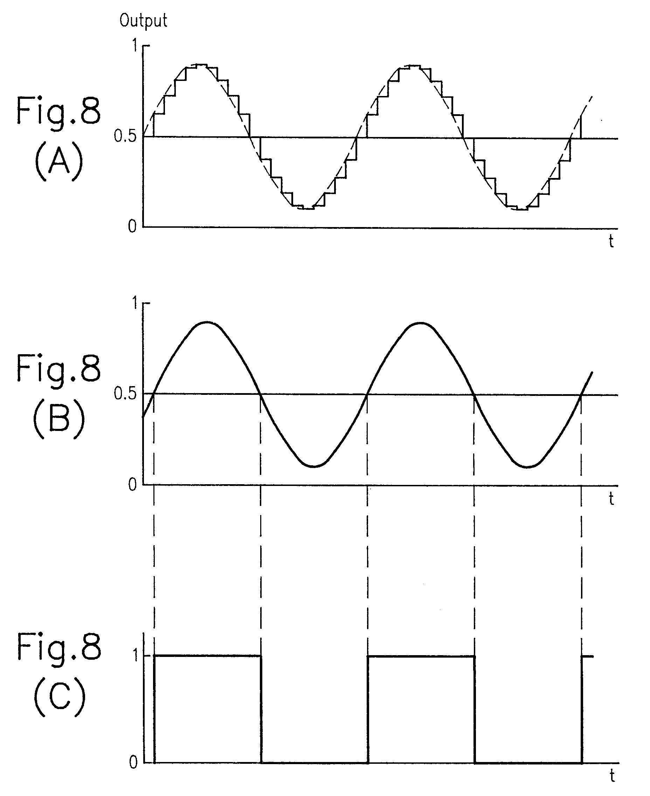

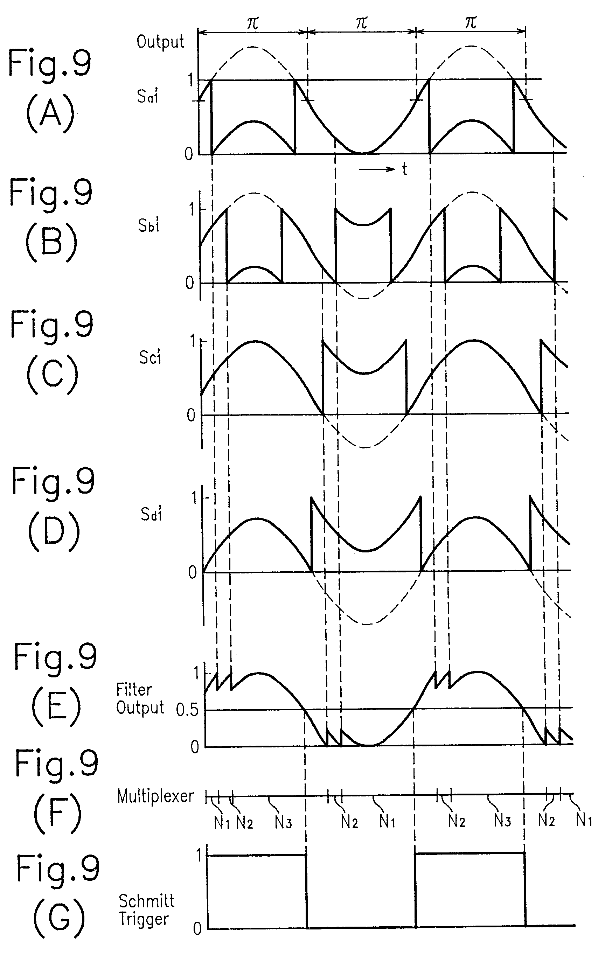

Since the phases of these reference signals $S_{R3}$, $S_{R4}$, $S_{R5}$, and $S_{R6}$ are different by $\pi/2$ in turn respectively, the levels of the output phase signals $S_{a1}$, $S_{b1}$, $S_{c1}$, and $S_{d1}$ are also different by 0.25 (corresponding to $\pi/2$) in turn respectively to the phase of the same ultrasonic signal $S_{U5}$. Next, by taking phase signals $S_{a1}$, $S_{b1}$, $S_{c1}$, and $S_{d1}$ obtained in the manner above as bases, operations subsequent to multiplexer 36 will be described using the waveform diagrams of Figures 8 and 9. For simplicity, operation with multiplexer 36 fixed to optimum one of phase detectors 32a to 32d will be described. The detailed configuration and operation that selects the optimum position of multiplexer 36 will be described later.

First, a description in the case of a small phase change ($2\pi$ or less) due to vortices will be given using the waveform diagram shown in Figure 8. Figure 8 (A) shows the output waveform of sample/hold 37. Sample/hold 37 acquires the pulse width of the optimum phase signal selected with multiplexer 36 from phase signals $S_{a1}$, $S_{b1}$, $S_{c1}$, and $S_{d1}$ output from phase detectors 32a to 32d using timing signal $TG_4$, smoothes it, and then holds it for every one sampling cycle and restores the vortex signals as step-wise waveforms. The original vortex signals are those represented by a broken line. The waveforms corresponding to the vortex signals are then reproduced by smoothing the step-wise waveforms using filter 38 (Figure 8 (B)). Schmitt trigger 21 converts this reproduced sine wave to a rectangular wave taking 0.5 (Figure 8 (B)) as the threshold (Figure 8 (C)) and outputs it to output terminal 23.

Next, a description in the case of a large phase change ($2\pi$ or more) due to vortices will be given using the waveform diagram of Figure 9. The phase change in this example is 0 to $3\pi$ (initial phase is $3\pi/2$). Figure 9 (A) to (D) shows waveforms of outputs $S_{a1}'$, $S_{b1}'$, $S_{c1}'$ and $S_{d1}'$ from filter 38 respectively when phase signals $S_{a1}$, $S_{b1}$, $S_{c1}$, and $S_{d1}$ output from phase detectors 32a to 32d are connected to each corresponding fixed position of multiplexer 36 one by one.

Since phase signals $S_{a1}$, $S_{b1}$, $S_{c1}$, and $S_{d1}$ change to the shape of the teeth of a saw between 0 and 1 as shown in Figure 7 in each phase change and, if 1 is exceeded, return to 0, filter outputs $S_{a1}'$, $S_{b1}'$, $S_{c1}'$ and $S_{d1}'$ also change correspondingly. Since filter outputs $S_{a1}'$, $S_{b1}'$, $S_{c1}'$ and $S_{d1}'$ have phases each shifted by $\pi/2$ corresponding to reference signals $S_{R3}$, $S_{R4}$, $S_{R5}$, and $S_{R6}$ in turn as shown in Figure 7, their waveforms are discontinuous as shown in Figure 9 (A) to (D), their boundaries being 1 and 0 and each being shifted by $\pi/2$.

The result of selecting optimum phase signals $S_{a1}$, $S_{b1}$, $S_{c1}$, and $S_{d1}$ in every sampling using multiplexer 36 operated with selection signal $Y_n$ output from channel selector 35 is shown in the filter output of Figure 9 (E). The order of selecting such an optimum position of multiplexer 36 is shown in Figure 9 (F). Switch numbers $N_1$, $N_2$, $N_3$, and $N_4$ correspond to the numbers for obtaining

phase signals $S_{a1}$, $S_{b1}$, $S_{c1}$, and $S_{d1}$ respectively in this order, and in this example, the waveforms shown in Figure 9 (E) can be obtained by selecting switches in the order of $N_1 \rightarrow N_2 \rightarrow N_3 \rightarrow N_2 \rightarrow N_1 \rightarrow N_2 \rightarrow N_3 \rightarrow N_2 \rightarrow N_1$.

Schmitt trigger 21 converts the filter output shown in Figure 9 (E) to rectangular waves as shown in Figure 9 (G). In spite of the rapid change in the waveforms shown in Figure 9 (E) at the switch-over points of multiplexer 36 with a width of 0.25 for the change, a rectangular Schmitt output can be obtained corresponding to vortex signals without problems because the median of the trigger level is set to 0.5.

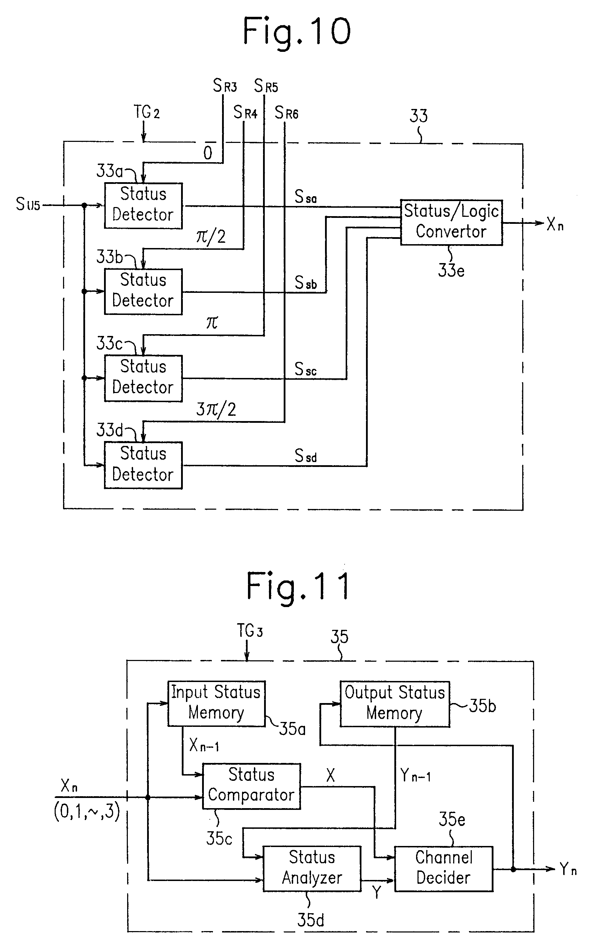

The above description is an overview of the entire configuration and operation of the embodiment shown in Figure 3. Of these, internal configurations for signal analyzer 33 and channel selector 35, which are the circuits for selecting the optimum of phase signals $S_{a1}$, $S_{b1}$, $S_{c1}$, and $S_{d1}$, are described in detail using Figure 10 and Figure 11.

Figure 10 is a block diagram showing the internal configuration of signal analyzer 33 shown in Figure 3. Reference signals $S_{R3}$, $S_{R4}$, $S_{R5}$, and $S_{R6}$ of phase 0, $\pi/2$ $\pi$, and $3\pi/2$ are supplied to status detectors 33a, 33b, 33c, and 33d respectively and these status detectors detect the status of ultrasonic signal $S_{U5}$ whether it is at a high or low level at the rise time of these reference signals and output them to status/logic converter 33e as status signals $S_{Sa}$, $S_{Sb}$, $S_{Sc}$, and $S_{Sd}$. Status/logic converter 33e digitizes the phase status of ultrasonic signal $S_{U5}$ using these status signals $S_{Sa}$, $S_{Sb}$, $S_{Sc}$, and $S_{Sd}$ and outputs it as phase pattern signal $X_n$.

Figure 11 is a block diagram showing the internal configuration of channel selector 35 shown in Figure 3. Channel selector 35 consists of input status memory 35a, output status memory 35b, status comparator 35c, status analyzer 35d, channel decider 35e and others.

Input status memory 35a stores phase pattern signal $X_{n-1}$ determined in the previous cycle in status/logic converter 33e and output status memory 35b stores the contents of selection signal $Y_{n-1}$ output to multiplexer 36 in the previous cycle. Status comparator 35c recognizes the discrepancy between phase pattern signal $X_n$ determined in the current cycle and phase pattern signal $X_{n-1}$ determined in the previous cycle. While, status analyzer 35d recognizes the interrelationship between phase pattern signal $X_n$ determined in the current cycle and selection signal $Y_{n-1}$ determined in the previous cycle. Channel decider 35e receives the outputs of status comparator 35c and status analyzer 35d respectively and outputs selection signal $Y_n$ for the current cycle by determining the output contents by the result of the decision for these inputs.

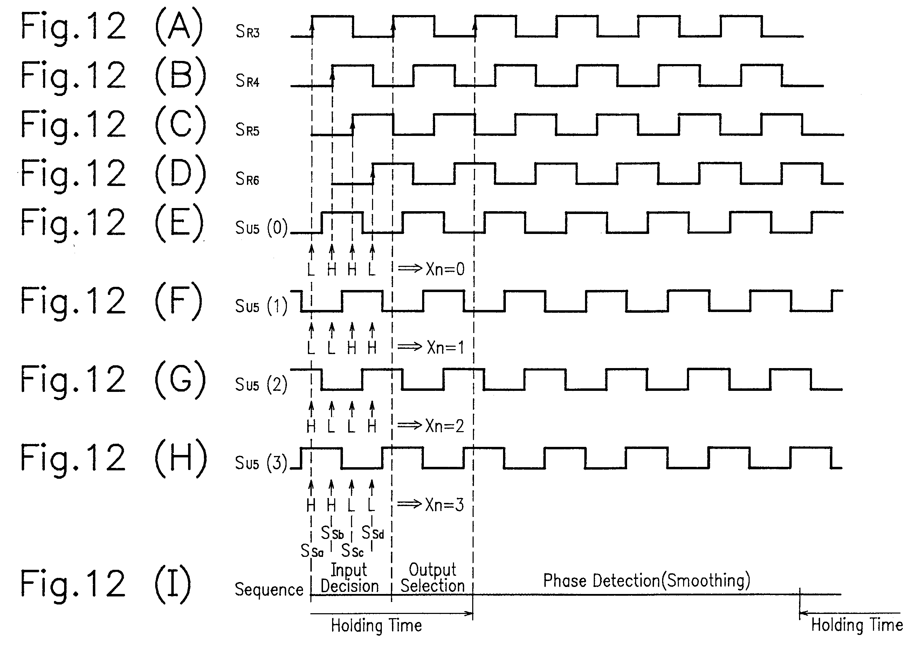

Next, operation of signal analyzer 33 whose tangible internal configuration is shown in Figure 10 will be described using the waveform diagram in Figure 12. Figures 12 (A) to 12 (D) show reference signals $S_{R3}$, $S_{R4}$, $S_{R5}$, and $S_{R6}$ having phases 0, $\pi/2$, $\pi$, and $3\pi/2$

respectively; Figures 12 (E) to 12 (H) show ultrasonic signals in four phase statuses $S_{U5}(0)$, $S_{U5}(1)$, $S_{U5}(2)$, and $S_{U5}(3)$; and Figure 12 (I) show the sequence of these ultrasonic signals.

Status detectors 33a, 33b, 33c, and 33d detect whether ultrasonic signal $S_{U5}$ is at a high level or low level at the time of the rise of reference signals $S_{R3}$, $S_{R4}$, $S_{R5}$, and $S_{R6}$ and digitizes these statuses in status/logic converter 33e as the current phase pattern status of ultrasonic signal $S_{U5}$. For example, when ultrasonic signal $S_{U5}$ corresponding to reference signal $S_{R3}$ is ultrasonic signal $S_{U5}(0)$, which is in the phase relationship shown in Figure 12 (E), at the time of the rise of each reference signal $S_{R3}$, $S_{R4}$, $S_{R5}$, and $S_{R6}$, the levels of ultrasonic signal $S_{U5}(0)$ are detected with status detectors 33a, 33b, 33c, and 33d as binary data status signals $S_{Sa}$, $S_{Sb}$, $S_{Sc}$, and $S_{Sd}$ of low (L), high (H), high (H), and low (L). Then, status/logic converter 33e defines this phase status as phase pattern signal $X_n = 0$ using these status signals $S_{Sa}$, $S_{Sb}$, $S_{Sc}$, and $S_{Sd}$ and outputs it.

In such a manner, for the statuses of ultrasonic signals $S_{U5}(1)$ to $S_{U5}(3)$ (Figures 12 (F) to 12 (H)), status signals $S_{Sa}$, $S_{Sb}$, $S_{Sc}$, and $S_{Sd}$ represented with H or L are output in a phase relationship to one cycle of reference signals $S_{R3}$, $S_{R4}$, $S_{R5}$, and $S_{R6}$, and status/logic converter 33e defines phase pattern signals $X_n = 1$ to 3 using these status signals and outputs them to channel selector 35.

The above detection of phase pattern signals $X_n = 1$ to 3 is controlled by timing signal $TG_2$ and detection is executed during a period corresponding to the first cycle of reference signal $S_{R3}$ of phase 0 as shown in Figure 12 (I). During the period corresponding to the second cycle, output selection is executed in channel selector 35 by timing signal $TG_3$, and further during the period corresponding to the third cycle and later, sample/hold 37 acquires the phase signal of the output by timing signal $TG_4$ and, after smoothing, holds this signal for the period until the next phase detection begins (Figure 12 (I)). These are further described in the following.

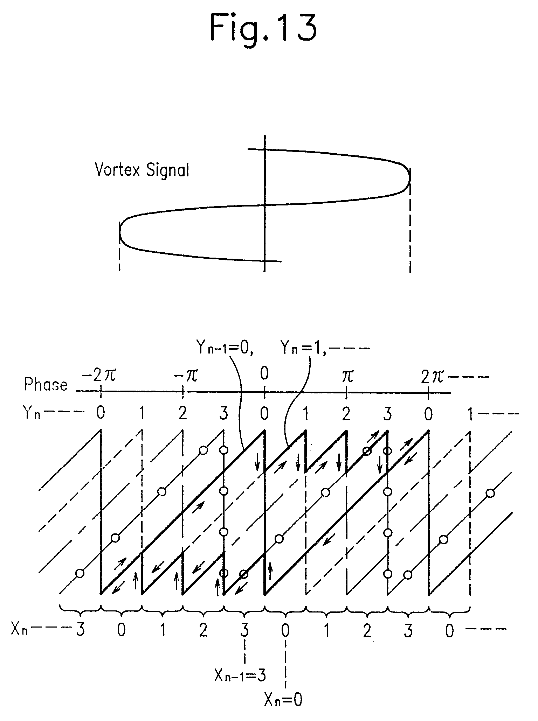

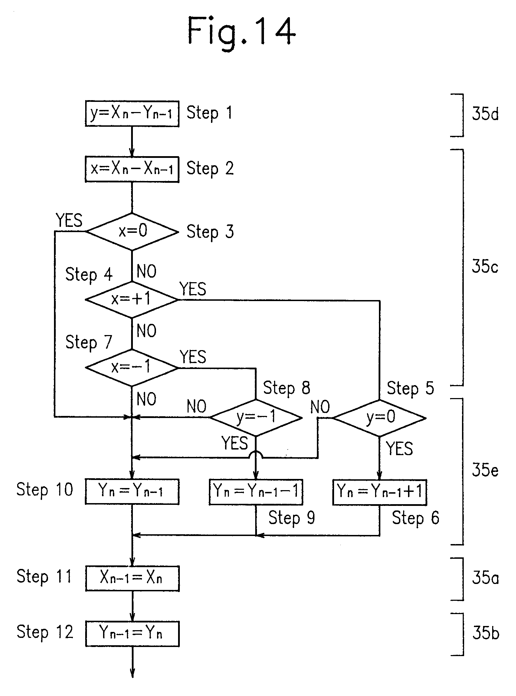

An overview of the operation of channel selector 35 will be described using Figure 11 showing a tangible internal configuration, Figure 13 illustrating a selection diagram, and Figure 14 indicating a flow chart. In Figure 13, the upper part shows the waveform of a vortex signal when the phase shifts by $2\pi$ or more, the middle part shows phases corresponding to the amplitude of this vortex signal, and the lower part shows the corresponding selection diagram. This selection diagram is obtained by combining the characteristics shown in Figure 7 (A) to (D) to explain which is to be selected among phase detector 32a to 32d having the characteristics shown in Figure 7 (A) to (D).

The selection number 0 of selection signal $Y_n$ shows the line-segment characteristics (input/output characteristics) of phase detector 32a for reference signal $S_{R3}$ of phase 0; the selection number 1 the line-segment characteristics of phase detector 32b for reference signal $S_{R4}$ of phase $\pi/2$; the selection number 2 the line segment characteristics of phase detector 32c for reference signal $S_{R5}$ of phase $\pi$; and the selection number 3 the line-segment characteristics of phase detector 32d for reference signal $S_{R6}$ of phase $3\pi/2$ respectively; and they are represented by a solid line, broken line, alternating long and short dashed line, and circle dotted line in the above order. That is, phase detectors 32a to 32d are selected corresponding to $Y_n = 0$ to 3 respectively. At the same time, phase pattern signals $X_n$ are represented with numbers 0 to 3 in order to identify which phase pattern of Figures 12 (E) to 12 (H) ultrasonic signal $S_{U5}$ is. Their phases are shifted by $\pi/2$ in turn.

In a similar manner to Figure 9, in order to restore normal vortex signals, selection signal $Y_n$ is switched so that its connection is closed in a circulating manner as shown by the thick lines in the selection diagram corresponding to the vortex signal shown in the upper part of Figure 13. To process this operation logically, data processing should be executed in the form shown in the flow chart of Figure 14. At the right margin of Figure 14, the circuit numbers shown in Figure 11 to execute signal processing corresponding to the flow are shown. In the following description, in counting selection signals $Y_n$ and phase pattern signals $X_n$, the rule to add 1 when the number changes from 3 to 0, and to subtract 1 when the number changes from 0 to 3 should apply.

In step 1, status analyzer 35d recognizes the relationship between phase pattern signal $X_n$ of ultrasonic signal $S_{U5}$ input in the current cycle and selection signal $Y_{n-1}$ (which has been stored in output status memory 35b) showing the phase detector selected in the previous cycle, computes the difference y between them, and outputs the result to channel decider 35e.

In step 2, input comparator 35c computes the difference x between phase pattern signal $X_n$ of ultrasonic signal $S_{U5}$ input in the current cycle and phase pattern signal $X_{n-1}$ (which has been stored in input status memory 35a) of ultrasonic signal $S_{U5}$ input in the previous cycle. Further, in step 3, whether there is a change in phase pattern signal $X_n$ or not in input comparator 35c is decided. If there is no change, the flow skips to step 10 where channel decider 35e outputs selection signal $Y_{n-1}$ in the previous cycle as selection signal $Y_n$ in the current cycle and proceeds to step 11 and then step 12 where the contents of input status memory 35a and output status memory 35b are replaced by those in the current cycle respectively.

If there is a change in step 3, the flow proceeds to step 4 where, if phase pattern signal $X_n$ has increased to +1, the flow proceeds to step 5. In step 5, it is decided at which point of the selection diagram (Figure 13) $X_n$ has increased.

If, in step 5, y = 0 holds ($X_n = Y_{n-1}$) as a result of the increase of $X_n$ by one (phase pattern increases by one), the phase signal of the input lumps out to the upper right part of the selection diagram necessitating output switching. For example, this means that it is necessary to switch the linear characteristics for $Y_{n-1} = 0$ to

the linear characteristics for $Y_n = 1$ in Figure 13, that is, switch phase detector 32a to 32b. Accordingly, in this case, $Y_n = Y_{n-1} + 1$ should be executed in step 6 to switch channels. The result is output and the flow proceeds to step 11 and step 12 where the contents of input status memory 35a and output status memory 35b are replaced by those in the current cycle respectively.

If, in step 5, $y = 0$ does not hold in spite of the increase of $X_n$ by 1, it means that it is not necessary to switch channels because the phase signal of the input changes on the same line in the selection diagram in Figure 13, and $Y_n$ should remain as the previous value.

If there is no need to change $Y_n$, the flow proceeds to step 10, channel decider 35e outputs selection signal $Y_{n-1}$ in the previous cycle as selection signal $Y_n$ in the current cycle and the flow proceeds to step 11 and step 12 where the contents in input status memory 35a and output status memory 35b are replaced by those in the current cycle respectively.

The above flow shown in steps 3, 4, 5, and 6 corresponds to the upper right part of line-segment characteristics in the selection diagram shown in Figure 13 and select characteristics for the saw-tooth-shaped wave part represented by thick lines in the direction of increasing the phase shift.

Next, if there is a change in step 3, the flow proceeds to step 4 and if $x = +1$ does not hold, the flow proceeds to step 7. In step 7, contrary to $x = +1$, a decision is made in the case where phase pattern signal $X_n$ decreases to -1 (phase pattern decreases by 1). In this case, the step corresponds to the lower left part of line-segment characteristics in the selection diagram shown in Figure 13 and select characteristics for the saw-tooth-shaped wave part with thick lines in the direction of decreasing the phase shift. In this case, steps 8 and 9 are opposite steps 5 and 6 but a decision is made in a manner similar for selection processing.

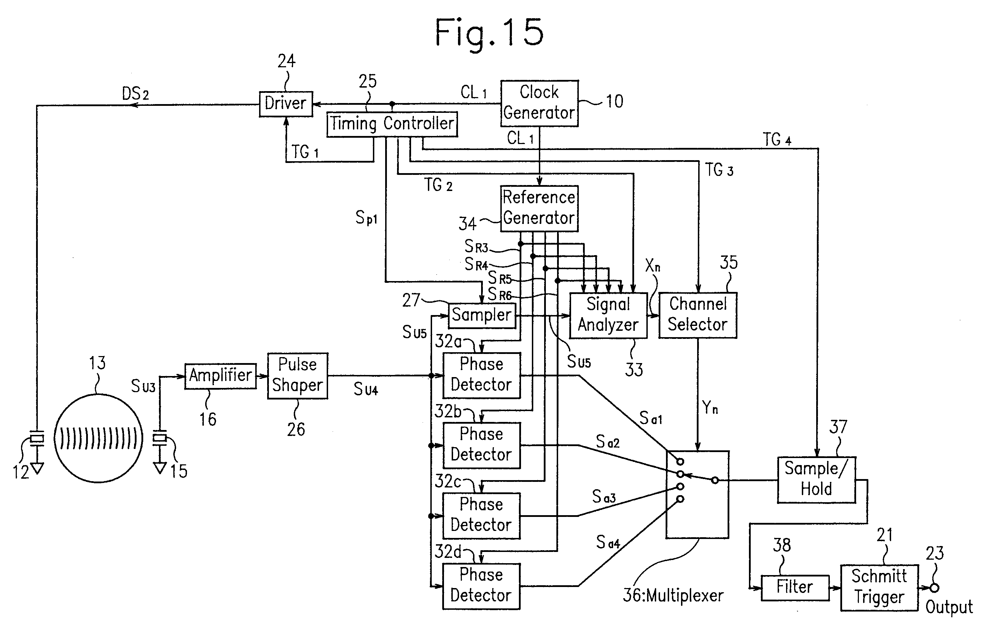

Figure 15 shows a configuration indicating the second embodiment of the present invention, different from the embodiment shown in Figure 3. Parts having the same functions as in the configuration shown in Figure 3 are given the same numbers and their description will be properly omitted.

This configuration outputs ultrasonic signal $S_{U4}$ (Figure 4 (C)), which is the output of pulse shaper 26 directly to phase detector 32a to 32d without intervening with sampler 27, but inputs signal $S_{U4}$ to signal analyzer 33 via sampler 27. Such a configuration can also have a similar effect to the configuration shown in Figure 3.

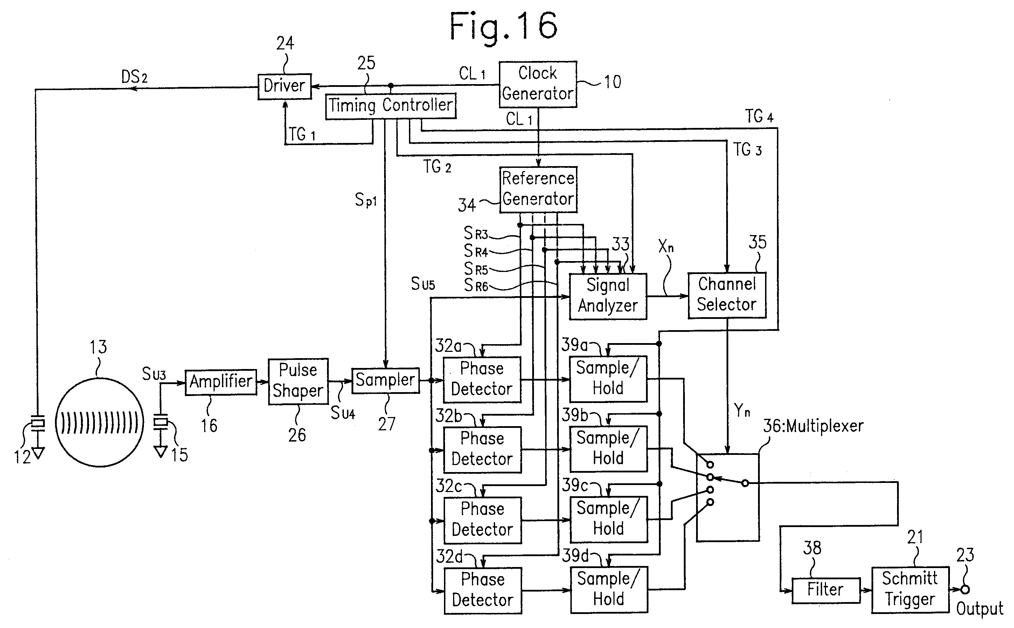

Figure 16 shows a configuration indicating the third embodiment of the present invention, different from the embodiment shown in Figure 3. In this case, four sample/holds 39a, 39b, 39c, and 39d corresponding to sample/hold 37 shown in Figure 3 are provided to each of phase detectors 32a, 32b, 32c, and 32d respectively and output from these sample/holds are selected with multiplexer 36 to output it to filter 38. Such a configuration can also have an effect similar to that in the configuration shown in Figure 3.

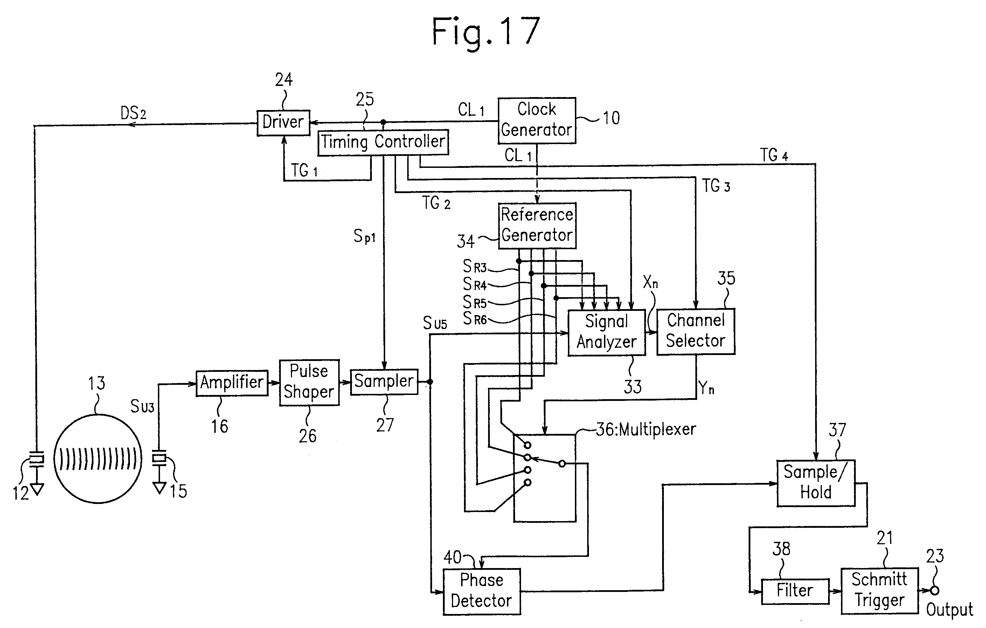

Figure 17 shows a configuration indicating the fourth embodiment of the present invention, different from the embodiment shown in Figure 3. In this case, four phase detectors 32a, 32b, 32c, and 32d are replaced by one phase detector 40 and reference signals $S_{R3}$, $S_{R4}$, $S_{R5}$, and $S_{R6}$ to be supplied to phase detector 40 are switched by multiplexer 36 to select either one to supply it to phase detector 40. Such a configuration can also have an effect similar to that in the configuration shown in Figure 3.

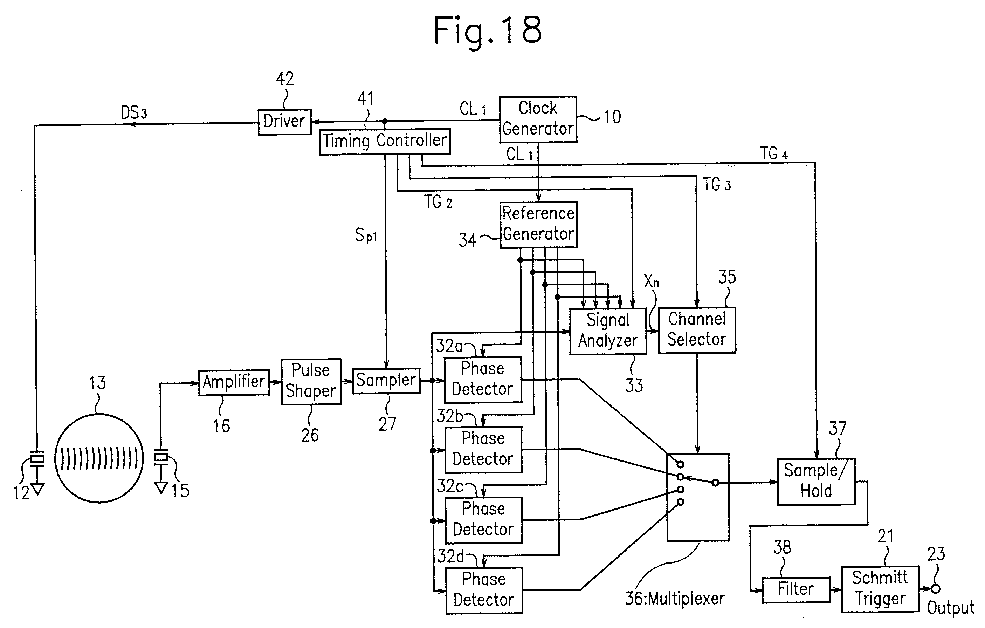

Figure 18 shows a configuration indicating the fifth embodiment of the present invention, different from the embodiment shown in Figure 3. In this case, timing controller 25 is replaced with timing controller 41 but basically this configuration has functions similar to those in the configuration shown in Figure 3 and the above figures, lacking only timing signal $TG_1$ to control burst wave transmission. Consequently, drive signal $DS_3$ sent out of driver 42 is a continuous wave but signal processing is executed in the same manner as shown in Figure 3. Such a configuration can also have an effect similar to that in the configuration shown in Figure 3.

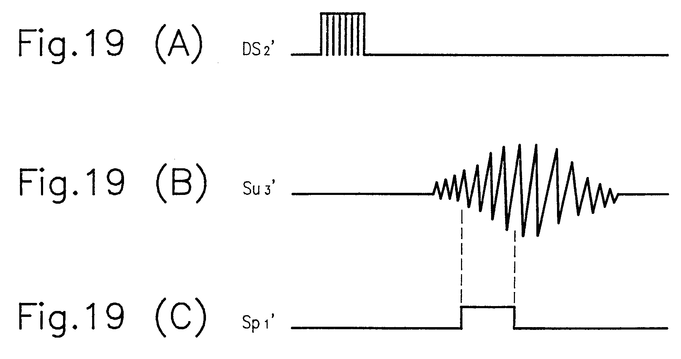

Figure 19 shows a case where the number of burst waves $DS_2'$ (Figure 19 (A)) sent from the driver and decreased to less than that of burst waves $DS_2$ shown in Figure 4 are transmitted, and the waves are received as ultrasonic signals $S_{U3}'$ (Figure 19 (B)) and further sampled with sampling signal $S_{P1}'$ (Figure 19 (C)) output from timing controller 25. In this case, the ultrasonic signal waves are sampled before they become a steady-state value using sampling signal $S_{P1}'$.

Such a configuration has the advantage of making the separation of signals from noise easy even if waves reflected a multiple number of times with or reverberated in metering pipe 13 are superimposed because the received signal waves can be sampled before this noise is received after making detours through metering pipe 13.

In addition, signal processing in the embodiments shown in Figure 3 described above and Figures 15 to 18 use configurations consisting of discrete hardware, e.g., gate arrays. However, it is readily understood that this signal processing can also be implemented by employing microcomputer software.

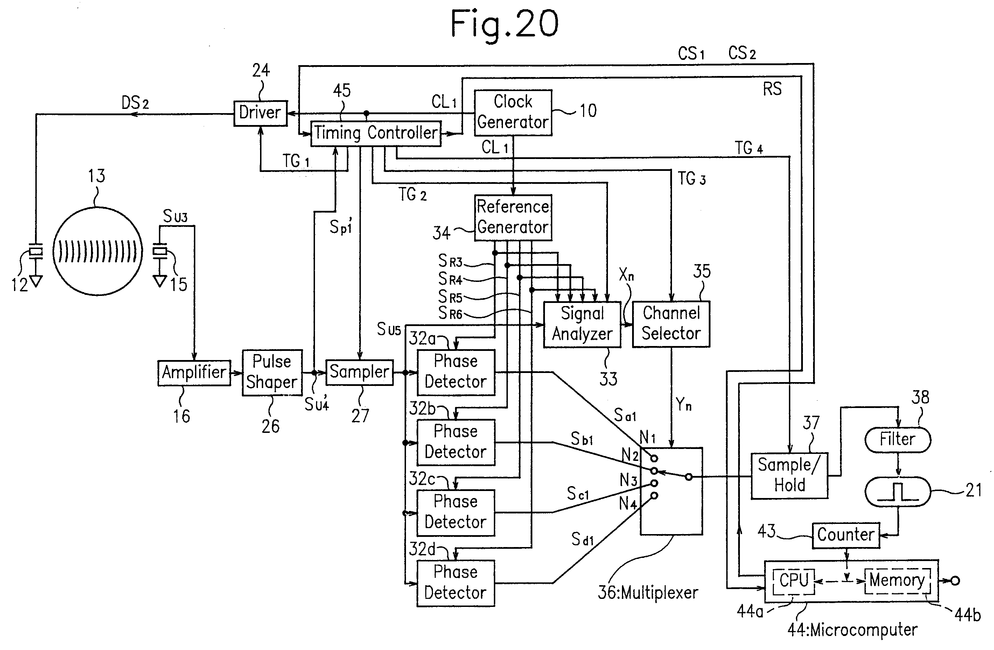

Figure 20 shows a block diagram for an entire configuration for embodiments constructed for eliminating influence by sound velocity. In this case, a configuration is employed, in which a microcomputer for signal processing using a pulse signal obtained after Schmitt trigger 21 shown in Figure 3 is added. Pulse signals from Schmitt trigger 21 are converted to digital signals with counter 43 and applied to microcomputer 44. Microcomputer 44 includes central processing unit (CPU) 44a, memory 44b, etc. and executes various functions, such as time signal generation, output control, computation, etc., not limited to flow signal processing.

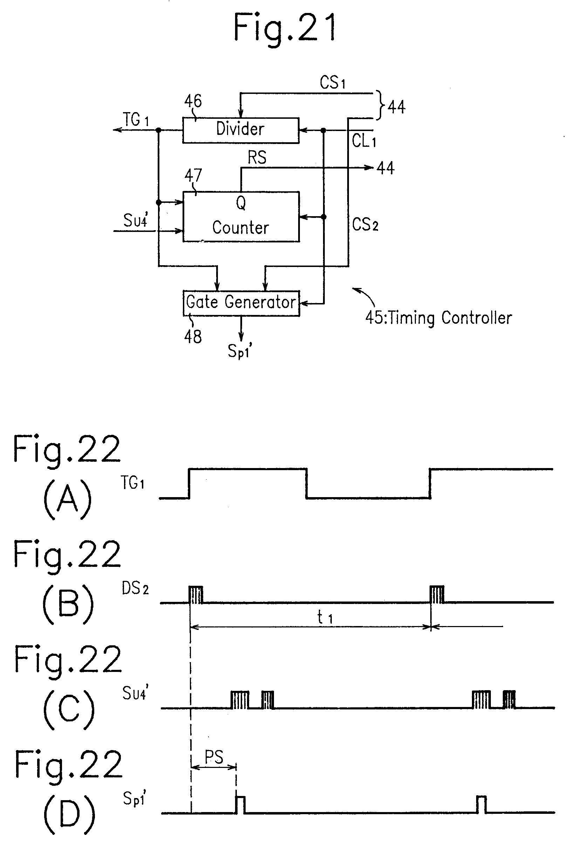

To remove the effect of sound velocity, sampling signal $S_{P1}'$ must be retained in the optimum position by adequately controlling timing controller 45 using microcomputer 44. A tangible internal configuration of timing controller 45 for this purpose is shown in Figure 21 and its operating time in Figure 22.

Figure 21 shows a configuration of timing controller 45 which consists of divider 46, counter 47, and gate generator 48, and control signal $CS_1$ to control the dividing ratio of the divider and control signal $CS_2$ to control sampling signal $S_{P1}'$ are input from microcomputer 44.

Divider 46 receives reference clock $CL_1$ from clock generator 10, divides the reference clock corresponding to the division ratio determined by control signal $CS_1$ and, by sending out timing signal $TG_1$ (Figure 22 (A)) to send burst waves to driver 24, drive signal $DS_2$ (Figure 22 (B)) is sent out to ultrasonic transmitter 12.

Counter 47 starts counting reference clock $CL_1$ input in synchronization with the rise of timing signal $TG_1$ and sends out counts n from its output terminal Q to microcomputer 44 as receiving signal RS by receiving ultrasonic signal $S_{U4}'$ (Figure 22 (C)). If it is assumed that the inner diameter of metering pipe 13 is D and the frequency of reference clock $CL_1$ is $f_0$, CPU 44a can calculate sound velocity C using the following formula stored in memory 44b:

$$C = D/(n/f_0) \qquad (3)$$

CPU 44a computes the time when sampling signal $S_{P1}'$ is to rise following the computing procedure stored in memory 44b using sound velocity C obtained in such a manner, and sends out control signal $CS_2$ which sets this computed value as preset setpoint PS to gate generator 48. This preset setpoint PS is set so that this setpoint is the time when a predetermined number of waves is reached after receiving sampling signal $S_{P1}'$.

Gate generator 48 starts counting for reference clock $CL_1$ input in synchronization with the rise of this timing signal $TG_1$ and, when this count reaches the preset setpoint PS, sends out sampling signal $S_{P1}'$ (Figure 22 (D)) whose gate width is set in advance from the output terminal Q.

Since the position of sampling signal $S_{P1}'$ is set accurately by measuring sound velocity C in such a manner, even if the sound velocity changes greatly, generated vortex signals cannot be missed by a shift in the gating position. However, it is not necessary to measure the sound velocity for every burst wave emission but it is sufficient to carry out the measurement in any cycle as necessary.

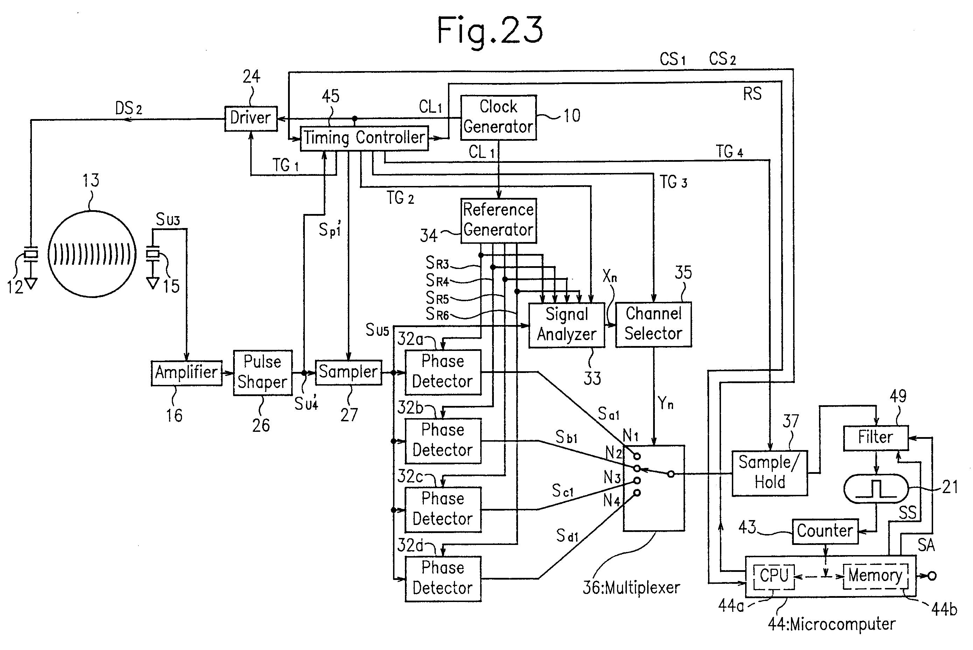

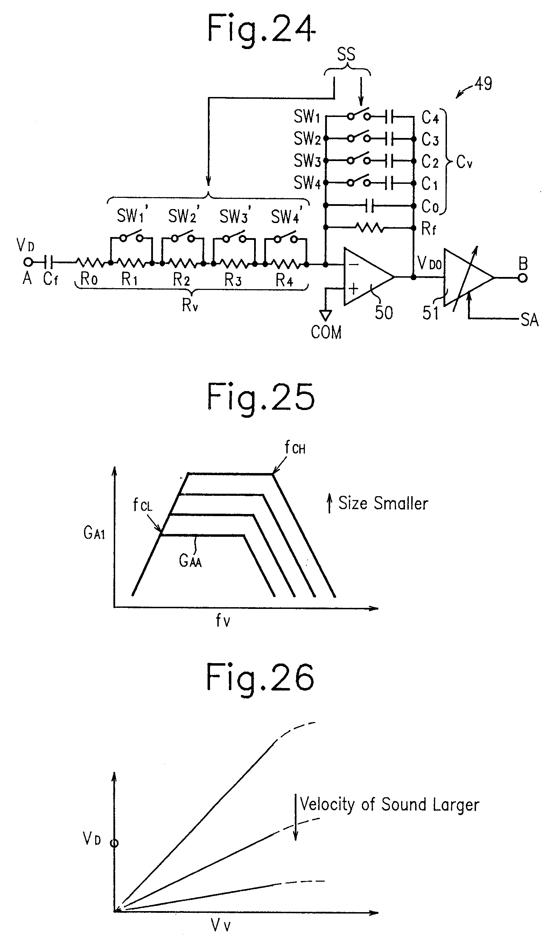

Figure 23 shows an entire configuration in which a part where vortex signal waveform shaping is effectively executed for every size of metering pipe is added to the configuration in Figure 20. In Figure 23, filter 38 in Figure 20 is replaced by filter 49. In filter 49, filter corner frequencies are switched with size-selection signal SS output from microcomputer 44 and sound velocity compensation is carried out by sound velocity adjustment signal SA. Figure 24 shows the tangible configuration for filter 49.

Both the signal frequency band and amplitude of vortex flowmeter signals are different for each respective meter size and so generally the signal processing circuit configuration becomes complicated, but employing the configuration as shown in Figure 24 simplifies circuit configuration. In Figure 24, a fixed capacitor $C_0$, series circuit capacitors $C_1$ to $C_4$ and corresponding switches $SW_1$ to $SW_4$, and a resistor $R_f$ are connected in parallel across the inverted input terminal (-) and the output terminal of operational amplifier 50 whose non-inverted input terminal (+) is connected to the common potential point COM, and a fixed capacitor $C_f$, fixed resistor $R_0$, and resistors $R_1$ to $R_4$ each connected in parallel with switches $SW_1'$ to $SW_4'$ respectively are connected in series between the inverted input terminal (-) and input terminal A to which the output signal from sample/hold 37 is input. These form a bandpass filter as a whole.

Switches $SW_1$ to $SW_4$ and $SW_1'$ to $SW_4'$ are switched by size-selection signal SS output from microcomputer 44. The output terminal of operational amplifier 50 is connected to the input terminal of variable gain amplifier 51. The gain of this amplifier 51 is also adjusted by the sound velocity adjustment signal SA output from the same microcomputer 44. Finally, the output of operational amplifier 51 is output to the input terminal of Schmitt trigger 21 via output terminal B of amplifier 51.

First, operation of the bandpass filter switched by size-selection signal SS will be described using the characteristics diagram in Figure 25. The horizontal axis expresses the vortex frequency $f_V$ and the vertical axis gain $G_{A1}$. If the series resistance value of fixed resistor $R_0$ and resistors $R_1$ to $R_4$ is represented by $R_V$ and the parallel capacitance value of fixed capacitor $C_0$ and capacitors $C_1$ to $C_4$ by $C_V$, the lower limit corner frequency $f_{CL}$ is determined by

$$f_{CL} \propto 1/C_f R_V \qquad (4)$$

The upper limit corner frequency $f_{CH}$ is determined by

$$f_{CH} \propto 1/R_f C_V \qquad (5)$$

And gain $G_{AA}$ is determined to be

$$G_{AA} = (R_f/R_V) \qquad (6)$$

At the same time, modulation factor m, indexing the amount of phase change due to the vortices, is given by the expression below corresponding tangibly to the second term of equation (2).

$$m \propto DV_V f_S/C^2 \qquad (7)$$

where D is the size, $V_V$ is the flow velocity, C is the sound velocity, and $f_S$ is the frequency of the ultrasonic signal.

The phase demodulation signal $V_D$ (amplitude) of the vortices obtained at input terminal A is expressed as shown below because it is proportional to modulation factor m if the frequency of ultrasonic signal $f_S$ is constant.

$$V_D \propto DV_V/C^2 \qquad (8)$$

While, vortex frequency $f_V$ is represented as shown below.

$$f_V \propto V_V/D \qquad (9)$$

Microcomputer 44 sets resistance $R_V$ of the bandpass filter proportional to size D, and capacitance $C_V$ proportional to size D using size-selection signal SS output to filter 49. With this setting, bandpass filter gain $G_{AA}$ is set to be inversely proportional to size D, that is, resistance $R_V$ is proportional to size D, and since modulation factor m is proportional to size D from equation (7), the amplitude of vortex phase demodulation signal $V_{D0}$ becomes independent of size D but dependent on sound velocity C and flow velocity $V_V$ only. For this reason, it has the advantage that waveforms are unlikely to saturate.

In addition, since gain $G_{AA}$ and lower limit corner frequency $f_{CL}$ are inversely proportional to resistance $R_V$, that is, to meter size D as shown in equations (4) and (6), and capacitance $C_V$ is set proportional to size D by size-selection signal SS, upper limit corner frequency $f_{CH}$ is inversely proportional to size D.

For this reason, as shown in Figure 25, the bandwidths of the bandpass filter are equal in the flow velocity range for each size. Further, the relationship between flow velocity $V_V$ and phase demodulation signal $V_{D0}$ shows no dependency on size and varies dependent on sound velocity C only as shown in Figure 26.

As described above, the vortex phase demodulation signal $V_{D0}$ obtained at the output terminal of operational amplifier 50 varies with sound velocity C and flow velocity $V_V$. Of these, for sound velocity C, the gain of variable gain amplifier 51 is compensated by sound velocity adjustment signal SA output from microcomputer 44, and output to output terminal B. Sound velocity adjustment signal SA is prepared using sound velocity C computed in equation (3) with CPU 44a shown in Figure 20.

Filter 49 formed in such a manner has only the variable components $R_V$ and $C_V$; $C_f$ and $R_f$ are fixed and furthermore, although $C_f$, since it determines the lower side corner frequency, comes to have a large capacitance, it is cheap because it is a fixed capacitor. Filter 49 also has the advantage that the number of components and control lines are sufficiently few.

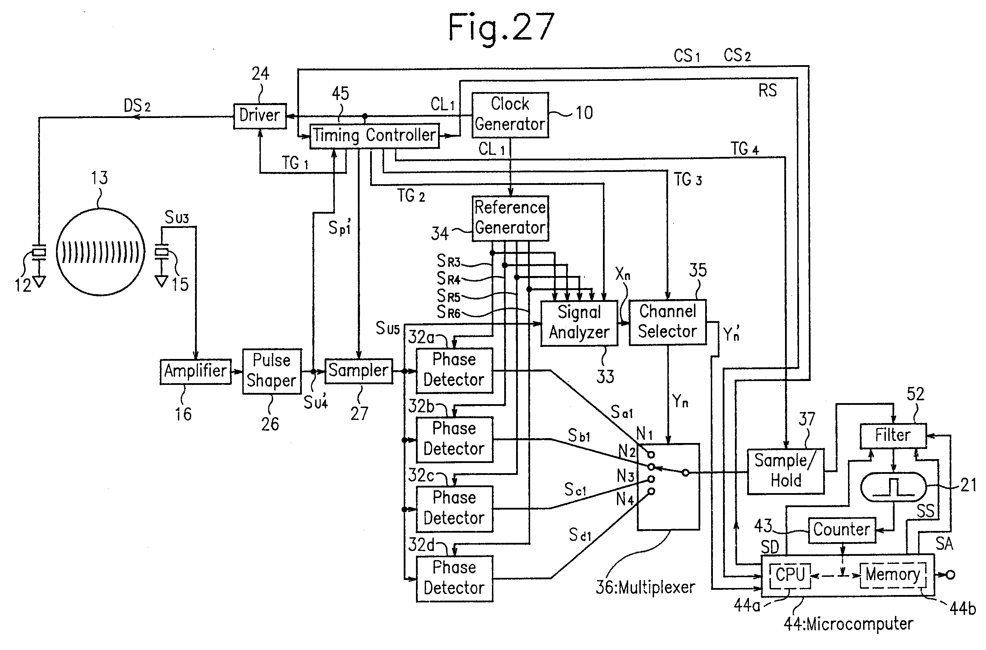

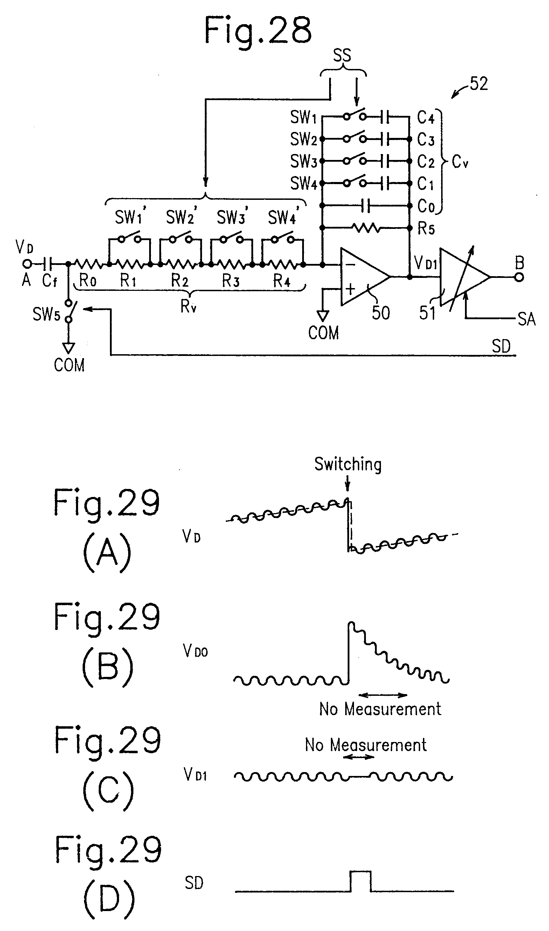

Figure 27 shows an entire configuration for the embodiment obtained by improving a part of that shown in Figure 23. Figure 28 shows a tangible configuration for the filter obtained by improving a part of that shown in Figure 24. To microcomputer 44, selection signal $Y_n'$

is input from channel selector 35 and from microcomputer 44, switching signal SD is output to filter 52.

In filter 52 shown in Figure 28, switch $SW_5$ is inserted between the connecting point of capacitor $C_f$ with resistor $R_0$ and the common potential point COM and switch $SW_5$ is opened or closed with switching signal SD output from microcomputer 44. Next, operation of filter 52 configured in such a manner will be described using the waveform diagram shown in Figure 29, while comparing it with filter 49 shown in Figure 24. In filter 49, for example, where modulation factor m (refer to equation (7)) of vortex phase demodulation signal $V_D$ (Figure 29 (A)) input to input terminal A is small, if the reference wave is switched when the signal $V_D$ base linearly drifts by the initial phase change due to a temperature change and the phase change exceeds $2\pi$, signal $V_D$ represents a large differentiated change at the instant of switching as shown in Figure 29 (B) due to an abrupt voltage change resulting in the status where measurement is impossible for a prolonged period. Thus, switch $SW_5$ is closed by switching signal SD at this switching point (Figure 29 (D)) to shortcircuit the connection point of capacitor $C_f$ with resistor $R_0$ with common potential point COM. In this way, the period when measurement is impossible becomes very short, being a shortcircuiting period (Figure 29 (C)) only, providing the advantage of returning after switching becomes rapid.

This switching signal SD is determined by being computed with microcomputer 44. Modulation factor m is calculated and determined in microcomputer 44 by equation (7) and this factor m is first compared with the small predetermined specified value $m_0$ stored in memory 44b. As a result, if these are in the relation shown by $m < m_0$, switching signal SD is output to close switch $SW_5$ associated with switching by selection signal $Y_n'$ output from channel selector 35. However, if $m > m_0$, switching signal SD is not output regardless of a change in selection signal $Y_n'$. In such a manner, when modulation factor m is large, the reference signal is switched depending on normal selection signal $Y_n$ only. However, if modulation factor m is small, shortcircuiting switch $SW_5$ can output a stable signal because it makes the influence of reference signal switching small.

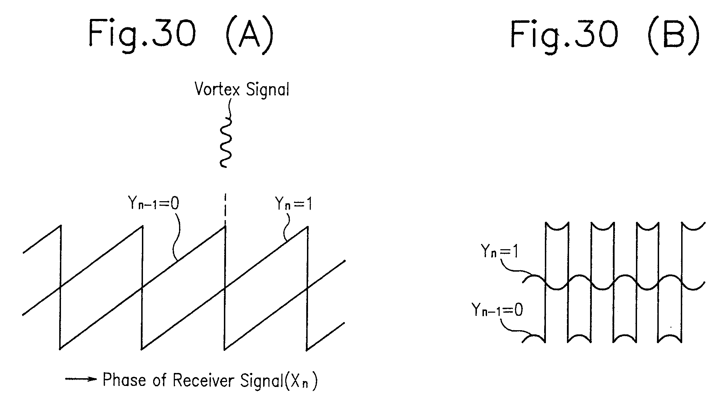

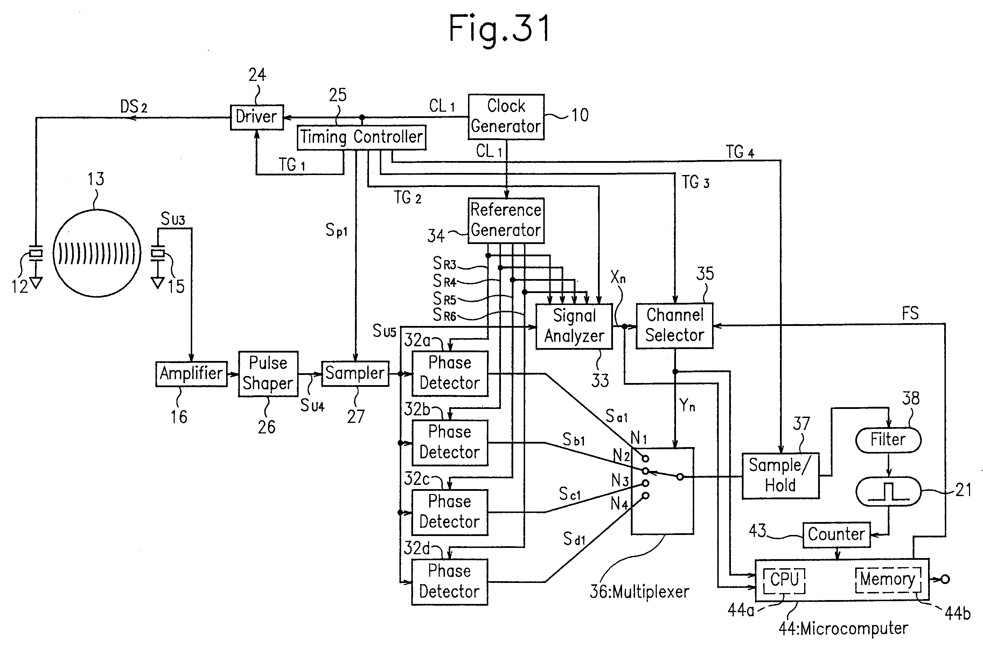

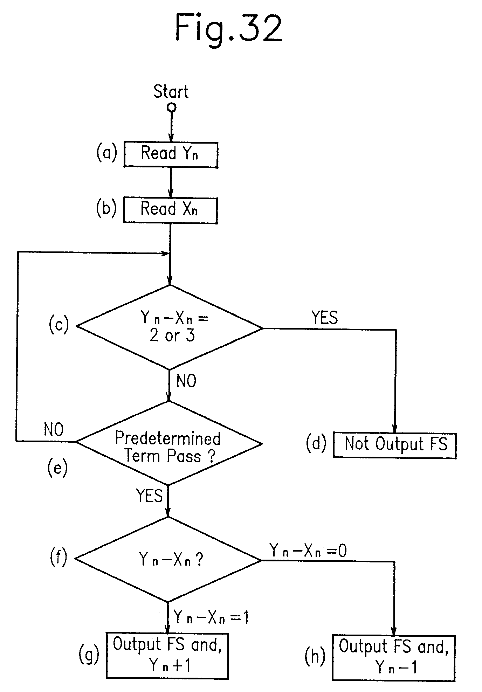

Figure 30 is a waveform diagram illustrating an example of faults generated by a special circumstance. Figure 31 shows an entire configuration for the embodiment in which a part of the circuits shown in Figure 3 is improved to solve these faults. Figure 32 is a flow chart showing the computation flow executed in the configuration in Figure 31.

As seen in Figure 30 (A), if modulation factor m is small, that is, the amplitude of the vortex signals is small, and, for example, the vortex signal stays in the vicinity of the position where selection signal $Y_{n-1}$ is switched to $Y_n$, a problem occurs where accurate waveforms cannot be reproduced as described below. For example, as shown in Figure 12 (I), since there is a time shift between the instant for an input decision and the instant for phase detection as a practical signal processing, a slight change in the signal delay or frequency in the hardware causes a phase shift between the instant when the sequence is decided and the instant when the phase is actually detected. Disregarding the fact that it is necessary to execute processing after switching ($Y_n$ = 1) by a selection signal originally, this occurs if the processing is executed before switching ($Y_{n-1}$ = 0), resulting in a waveform distortion as shown in Figure 30 (B). Thus, a configuration to eliminate this is shown in Figure 31. To microcomputer 44, phase pattern signal $X_n$ output from signal analyzer 33 and selection signal $Y_n$ output from channel selector 35 are input, and this problem can be eliminated by outputting a forced switching signal FS to channel decider 35e (Figure 11) of channel selector 35 through execution of the computation procedure shown in the flow chart in Figure 32 to forcibly execute switching to optimum selection signal $Y_n$.

Next, this flow chart is described. As the premise, modulation factor m is computed and determined in microcomputer 44 using the computation expression shown in equation (7), and so this factor m is assumed to be smaller than the specified value. In steps (a) and (b), CPU 44a in microcomputer 44 reads selection signal $Y_n$ and phase pattern signal $X_n$ into the predetermined area of memory 44b. In step (c), the difference between selection signal $Y_n$ and phase pattern signal $X_n$, $Y_n$ - $X_n$, is computed to decide whether the difference is 2 or 3. The fact that the difference is 2 or 3 means that the phase signal is positioned around 25%~75% of the available output span of the selection range (Figure 13).

If the result of the decision is "yes," forced switching signal FS is not output (step (d)) because of no necessity for forced switching and if it is "no," the flow proceeds to step (e) where a decision is made as to whether the predetermined term has passed or not and where steps (c) and (e) are repeated until the term has passed. If "yes" is decided in step (c) before the predetermined term passes, forced switching signal FS is not output (step (d)) because forced switching is not necessary. If the predetermined term has passed, it means that the vortex signal has been stagnant at the upper or lower end of the selection diagram (Figure 13) and so the signal is moved to be near the center by forced switching signal FS.

If the result of decision in step (f) is $Y_n$ - $X_n$ = 1, this means that the vortex signal has been positioned at the upper end of the selection diagram (Figure 13) and $Y_n$ is advanced by 1 (increased by +1) by outputting forced switching signal FS to channel selector 35 in step (g). On the other hand, if $Y_n$ - $X_n$ = 0, this means that the vortex signal has been positioned at the lower end of the selection diagram and thus $Y_n$ is moved back by 1 (subtracted by 1).

As described above, when a vortex signal of a small modulation factor has been stagnant for a predetermined time at the instant of switching selection signal

$Y_n$, the vortex signal is prevented from becoming distorted by moving the signal to an adjacent selection signal to forcibly move the center point of operation so that the signal is operated near the center of the selection diagram (Figure 13).

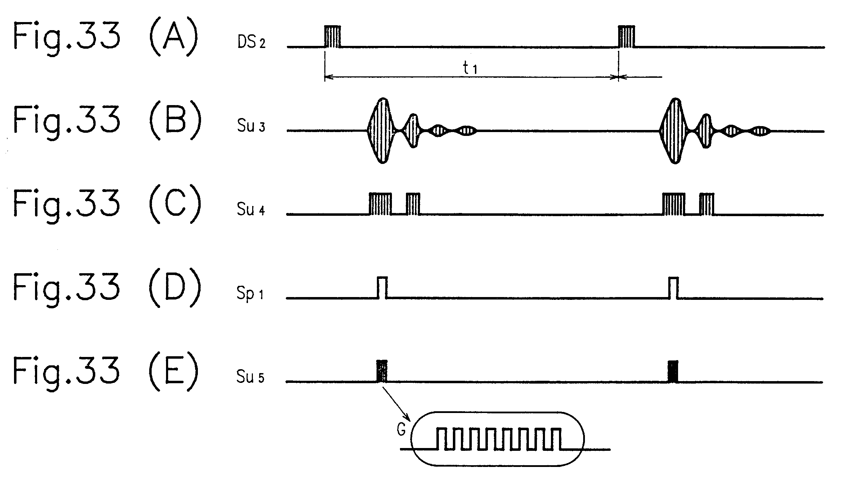

Next, in the circuits shown in Figure 3, an error in which there are missing pulses in the received ultrasonic signals will be described. As shown in Figure 33 (A), when drive signal $DS_2$ is applied to ultrasonic transmitter 12, ultrasonic waves are modulated by vortices in the measuring fluid and received as ultrasonic signal $S_{U3}$ with ultrasonic receiver 15 (Figure 33 (B)) and are output as ultrasonic signal $S_{U5}$ after further being converted to pulses in pulse shaper 26 (Figure 33 (C)) and sampled by sampling signal $S_{P1}$ in sampler 27.

This sampled ultrasonic signal $S_{U5}$ includes pulse waves phase-modulated by vortices as shown in an enlarged figure G in Figure 33, but if bubbles or other substances obscuring ultrasonic waves pass through metering pipe 13, all or part of these pulse waves may disappear. In such a case, if ultrasonic signal $S_{U5}$ is subjected to normal vortex signal restoration processing by being sent to phase detectors 32a to 32d without treatment, the output becomes abnormal.

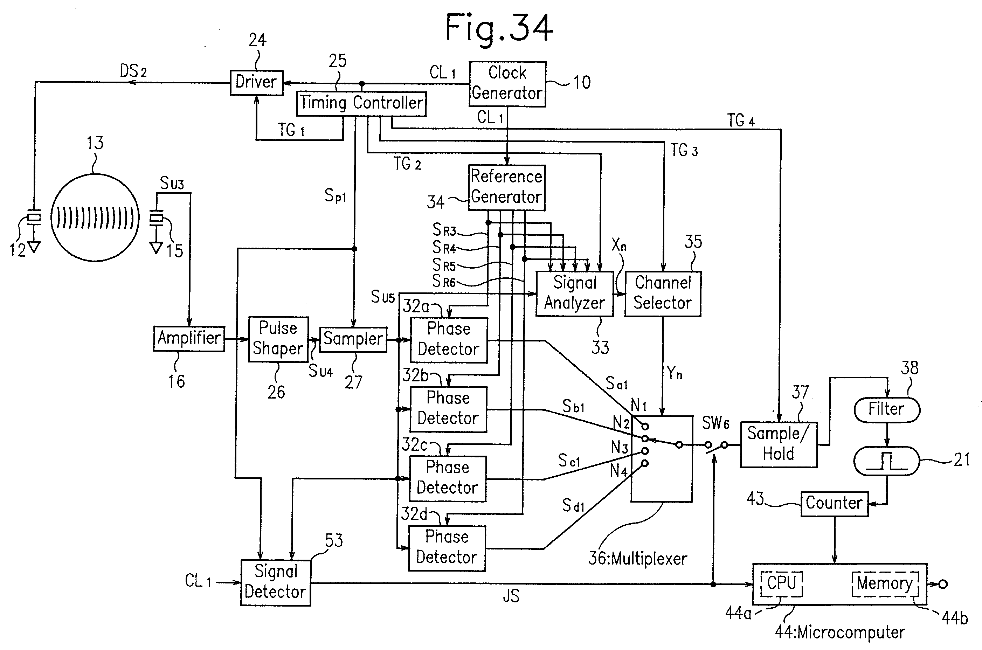

This problem is solved using a circuit configuration as shown in Figure 34. As hardware configuration in this case, signal detector 53 is newly provided and also switch $SW_6$ is inserted between multiplexer 36 and sample/hold 37. Signal detector 53 receives reference clock $CL_1$ from clock generator 10, sampling signal $S_{P1}$ output from timing controller 25, and ultrasonic signal $S_{U5}$ and detects whether pulses are present or not during one cycle or more in ultrasonic signal $S_{U5}$ sampled by sampling signal $S_{P1}$ (refer to the enlarged figure G).

As the result, abnormal vortex signals are prevented from being output by sending binary decision signal JS, for example, H level if pulses are present and L level if pulses are not present, to switch $SW_6$ and turning off switch $SW_6$ when the L level is detected. The decision signal JS is also output to microcomputer 44 which holds the output using software, outputs an alarm when the L level continues over a long period, or causes burn-out in the output using an incorporated program based on the decision signal JS to execute output control.

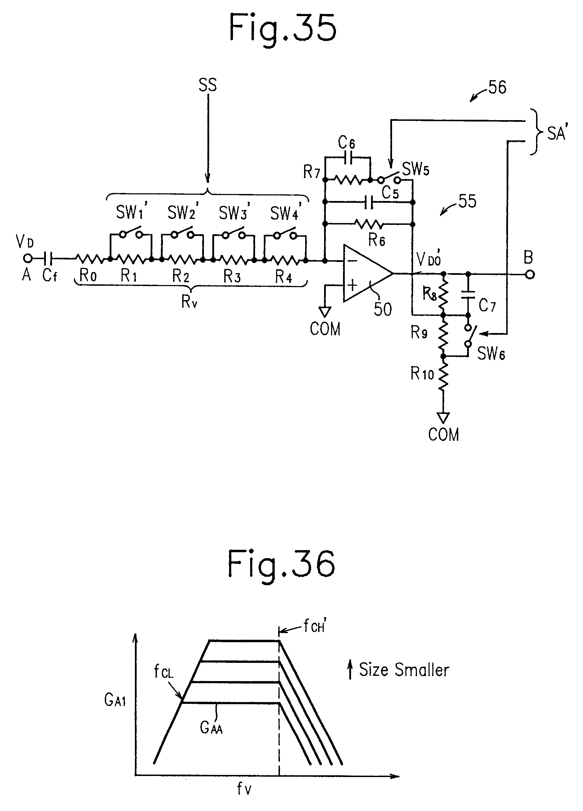

Figure 35 shows a circuit configuration obtained by simplifying the configuration shown in Figure 24 by integrating filter 49 and variable gain amplifier 51. That is, negative feedback circuit 55 is provided across the input and output terminals of operational amplifier 50 to compose filter 56 with a variable gain function. The configuration shown in Figure 35 can be used in place of filter 49 shown in Figure 23.

Negative feedback circuit 55 comprises resistors $R_6$ to $R_{10}$, capacitors $C_5$ to $C_7$, switch $SW_5$, and switch $SW_6$. Across the output terminal and inverted input terminal of operational amplifier 50, a parallel circuit of resistor $R_6$ and capacitor $C_5$ is connected, and across this parallel circuit, a series circuit of switch $SW_5$ and a

parallel circuit of resistor $R_7$ and capacitor $C_6$ are connected.

Between the output terminal of operational amplifier 50 and common potential point COM, resistors $R_8$ to $R_{10}$ are connected in series and across resistor $R_8$, capacitor $C_7$ is connected in parallel. To the connecting point of resistors $R_8$, $R_9$ and capacitor $C_7$, one end of switch $SW_5$ is connected and across resistor $R_9$, switch $SW_6$ is connected.

Resistor $R_V$ is selected with size switching signal SS similar to the case shown in Figure 24, but since a capacitor corresponding to capacitance $C_V$ is not present, the circuit functions as fixed high cut filters. For this reason, as shown in Figure 36, the higher frequency side corner frequency $f_{CH}'$ is a constant value regardless of whether it is a smaller or larger size, different from the case shown in Figure 25.

The gain $G_{AA}$ of filter 56 is switched by a combination of switches $SW_5$ and $SW_6$ and switching can be done in four steps depending on the combination of on and off of sound velocity adjustment signal SA'. As described above, providing a gain variable function for operational amplifier 50 eliminates the necessity of providing variable gain amplifier 51 as shown in Figure 24 independently, serving to reduce the number of components. Therefore, as tangibly described together with the embodiments of the present invention, the invention according to claim 1 can provide stable reproduction of vortex signals even if the phase changes exceeding $2\pi$ due to the vortices, because more than one phase-detection means is switched automatically. For this reason, vortex signals can be stably detected in an environment for measuring fluids, such as large metering pipe size, fast flowing velocity or a low sound velocity gas, and thus the range of application can be expanded.

In addition, since the means of phase detection is switched automatically even if the initial phase varies with the change in sound velocity for the measuring fluid and the entire phase changes exceeding $2\pi$, stable vortex detection is possible even if the initial phase is in the vicinity of 0 or $2\pi$.

The invention according to claim 2 has the advantage of a simplified circuit configuration because, in addition to the effect of the invention described in claim 1, a similar effect may be obtained through only one means of phase detection.

The invention according to claim 3, since the sending and receiving of ultrasonic waves is intermittent, has the advantage of being capable of separating and rejecting noise which reaches the ultrasonic receiver via the metering pipe in sending ultrasonic waves into the measuring fluid from the ultrasonic transmitter.

The invention according to claim 4, since the transient state of burst waves is used, has the advantage of extremely reducing the number of burst waves, resulting in small reverberation, little noise, and a reduction in power consumption, in addition to the advantage of the invention according to claim 3.

The inventions described in claim 5 to claim 8 are different in configuration from the invention according to claim 1. However, even if the configurations are different, those inventions have substantially the same effect as that according to claim 1.

The invention according to claim 9, since it sets the sampling signal to an appropriate position using the sound velocity measured for the measuring fluid, does not overlook vortex signals due to a shift in the gate position even if the sound velocity changes greatly.

The invention according to claim 10, since the corner frequencies composing bandpass filters are suitably switched for sizes using the size switching signal even if the size of the vortex flowmeter is changed, can effectively implement the waveform shaping of vortex signals with a simple circuit configuration because the bandwidth of bandpass filters becomes an equal flow velocity range for each size.

The invention according to claim 11, since variable capacitor switching is omitted and a fixed high-cut filter is employed instead, can provide an effect equivalent to the invention according to claim 10 with a simplified configuration.

The invention according to claim 12, since the output signal of the bandpass filter is independent of the size and varies dependent on the flow velocity and sound velocity, can effectively implement the waveform shaping of vortex signals regardless of the sound velocity change, by compensating for the gain of the variable gain amplification means with sound velocity adjustment signals.

The invention according to claim 13, since the filter is configured to have a variable amplification function, can provide an effect equivalent to the invention according to claim 12, while reducing the number of components.

The invention according to claim 14, since a configuration to insert a switch closed for a short time by the switching signal connected between the connecting point of a capacitor and variable resistor and a common potential point is employed, can avoid making measurement impossible due to an abrupt voltage change at the instant of switching, even if the reference wave is switched when the base has drifted due to an initial phase change with a temperature change, if the modulation factor of the vortex phase demodulation signal is small.

The invention according to claim 15, since a configuration is employed, in which a forced switching signal which switches the selection signals forcibly is output to the channel selector when the modulation factor is small and the phase pattern signal is stagnant for the predetermined period around the switching instant for the selection signal, can accurately restore the vortex signal even if the vortex signal is stagnant for a relatively long period in the vicinity of the switching point when the selection signal is switched.

The invention according to claim 16, since a configuration is employed, in which absence of pulses of ultrasonic signals during one cycle or more is detected by the received-wave detection circuit and a decision signal is output, can provide stable measurement without causing a pulse disappearance even if bubbles or other ultrasonic wave obscuring substances pass through the metering pipe.

The invention according to claim 17, since the incorporated program controls output, such as holding or an alarm output, by the computation means when the decision signal is input, can readily detect an output abnormality.

## Claims

1.  A vortex flowmeter which is configured to calculate the flowrate of a measuring fluid flowing through a flow path using ultrasonic signals subjected to changes in propagation time due to Karman vortices, provided with a reference signal generation means outputting a plurality of reference signals of different phases, a signal analyzing means to output an input status signal by determining the relationship between the phases of said ultrasonic signals and each said reference signal, a plurality of phase-detection means to output phase signals by detecting phase differences between said ultrasonic signals and said reference signals, and a channel-selection means to select the optimum one of said phase signals using said input status signals and to output it as the selection signal, and which computes and outputs the flowrate signals using the said selected phase signal.
    〈Figures 3, 15, 16, and 18〉

2.  A vortex flowmeter which is configured to calculate the flowrate of a measuring fluid flowing through a flow path using ultrasonic signals subjected to changes in propagation time due to Karman vortices, provided with a reference signal generation means outputting a plurality of reference signals of different phases, a signal analyzing means to output an input status signal by determining the relationship between the phases of said ultrasonic signals and each said reference signal, a channel-selection means to send out a selection signal by selecting the optimum one of said reference signals using said input status signal, and a phase-detection means to output a phase signal by detecting the phase difference of the said ultrasonic signal based on the said reference signal selected with the said selection signal, and which computes and outputs the flowrate signals using the said phase signal.
    〈Figure 17〉

3.  A vortex flowmeter in accordance with claim 1 or 2, wherein burst waves are used as a drive signal for emitting ultrasonic waves into the said measuring fluid and the said ultrasonic signal is made by sampling part of the said burst waves with a sampling means.

4.  A vortex flowmeter in accordance with claim 3, wherein the sampling point in the said sampling means is determined as a point before the said burst waves reach a steady value.
    〈Figure 19〉

5.  A vortex flowmeter in accordance with claim 1, wherein the said input status signal and said phase signal are output as numerical data specialized with a plurality of phase patterns and as pulse width data respectively, and the said channel-selection means selects either item of the said pulse width data using the said numerical data and outputs it to a sample/hold means, and the vortex signals are restored by the sample/hold means and are output as the said flowrate signals.

6.  A vortex flowmeter which is provided with a driver to drive an ultrasonic transmitter based on the reference clock, an ultrasonic receiver to receive modulated ultrasonic waves obtained by emitting ultrasonic waves to vortices from the said ultrasonic transmitter and to output them as ultrasonic signals, a reference signal generation means to generate a plurality of reference signals of different phases based on the said reference clock, a sampling means to sample part of the said ultrasonic signal, a signal analyzing means to output an input status signal by determining the relationship between the phases of the output signal of the said sampling means and each said reference signal, and a plurality of phase-detection means to output phase signals by detecting the phase differences between the said ultrasonic signals and said reference signals, and a channel-selection means to select the optimum one of the said phase signals using the said input status signal, and which computes and outputs flowrate signals using the said selected phase signal.
    〈Figure 15〉

7.  A vortex flowmeter which is configured to calculate the flowrate of a measuring fluid flowing through a flow path using ultrasonic signals subjected to changes in propagation time due to Karman vortices, provided with a reference signal generation means outputting a plurality of reference signals of different phases, a signal analyzing means to output an input status signal by determining the relationship between the phases of said ultrasonic signals and each said reference signal, a plurality of phase-detection means to output phase signals by detecting the phase differences between the said ultrasonic signals and said reference signals, a sample/hold means to each of which each of these phase signals is input, and subjected to sample/hold to send out a plurality of hold signals, and a channel-selection means to select the optimum hold signal using the said input status signals, and which computes and outputs the flowrate signals using the said selected phase signal.

⟨Figure 16⟩

8. A vortex flowmeter which is provided with a driver to continuously drive an ultrasonic transmitter based on the reference clock, an ultrasonic receiver to receive modulated ultrasonic waves obtained by emitting ultrasonic waves to vortices from the said ultrasonic transmitter and to output them as ultrasonic signals, a sampling means to sample part of the said ultrasonic signal, a reference signal generation means to generate a plurality of reference signals of different phases based on the said reference clock, a signal analyzing means to output an input status signal by determining the relationship between the phases of the output signal of the said sampling means and each said reference signal, a plurality of phase-detection means to output phase signals by detecting the phase differences between the said output signal and said reference signals, and a channel-selection means to select the optimum one of the said phase signals using the said input status signal, and which computes and outputs flowrate signals using the said selected phase signal.

⟨Figure 18⟩

9. A vortex flowmeter in accordance with claim 1, which is provided with a timing controller that receives a first control signal, sends out drive signals based on this first control signal, receives signals subjected to changes in the propagation time due to Karman vortices and sends out these as received signals as well as sends out a sampling signal by a second control signal, and with a computation means which computes the sound velocity using the time difference between the sending of the said first control signal and reception of the said received signal and sends out the said second control signal by computing the instant at which the said sampling signal is raised based on the said sound velocity, and which uses the signal sampled with the said sampling signal as the said ultrasonic signal.

⟨Figures 20, 21 and 22⟩

10. A vortex flowmeter in accordance with claim 1, which is provided with a filter having an operational amplifier to whose input terminal a variable resistor is connected and in whose negative feedback circuit a variable capacitor is connected, and the said variable resistor and said variable capacitor are switched so that their values are proportional to the meter size respectively with a size switching signal, and with a computation means to compute the said size switching signal corresponding to the meter size, and the said phase signal is applied to the said input terminal of the said filter, and which outputs the said flowrate signal corresponding to the said filter output.

⟨Figures 23, 24, 25 and 26⟩

11. A vortex flowmeter in accordance with claim 1, which is provided with a filter having an operational amplifier to whose input terminal a variable resistor is connected and across whose input and output terminals a negative feedback circuit is connected and the said variable resistor is switched so as to be proportional to the meter size with a size switching signal, and with a computation means to compute the said size switching signal corresponding to the meter size, and the said phase signal is applied to the said input terminal of the said operational amplifier, and which outputs the said flowrate signal corresponding to the said filter output.

⟨Figures 23, 35, 36 and 26⟩

12. A vortex flowmeter in accordance with claim 10, which is provided with a variable gain amplification means whose gain is changed by a sound velocity adjustment signal for the said filter output signal, and the said computation means to that a function to compute the said sound velocity adjustment signal compensating for changes in the sound velocity is added, and which outputs the said flowrate signal corresponding to the output signal of the said variable gain amplification means.

⟨Figures 23, 24, 25, 26⟩

13. A vortex flowmeter in accordance with claim 11, wherein the said filter outputs a phase demodulation signal whose value is changed by the elements composing the said negative feedback circuit being switched by the sound velocity adjustment signal, and to the said computation means a function to compute the said sound velocity adjustment signal compensating for the changes in the sound velocity is added.

⟨Figures 23, 35, 36 and 26⟩

14. A vortex flowmeter in accordance with claim 1, which is provided with a filter formed with an operational amplifier to whose input terminal a capacitor and a variable resistor are connected in series and in whose negative feedback circuit a variable capacitor is connected, a switch connected between the connecting point of the said capacitor with the said variable resistor and a common potential point and closed for a short time by a switching signal, and a computation means to output the said switching signal associated with switching by a selection signal output from the said channel-selection means by deciding that the modulation factor indicating the amount of the phase change due to the vortices is small, and the said phase signal is applied to the said input terminal, and which outputs the said flowrate signal using the output of the said filter.

〈Figures 27, 28, and 29〉

15. A vortex flowmeter in accordance with claim 1, provided with a computation means in which the said selection signal and said input status signal as a phase pattern signal are input, the modulation factor is small, and when the said phase pattern signal is stagnant for a predetermined period around the switching point for the said selection signal, a forced switching signal to switch the selection signal by force is output to the said channel selector.

〈Figures 31 and 32〉

16. A vortex flowmeter in accordance with claim 1, provided with a signal detector to output a decision signal when the said detector detects that there is no pulse during one cycle or more in the said ultrasonic signal using the reference clock output from the clock generator and an ultrasonic signal obtained by sampling part of the burst waves received after ultrasonic waves are emitted into a measuring fluid with a sampling signal, and a holding means to hold the output signal of the said channel selector in the status before detection with the said decision signal.

〈Figure 34〉

17. A vortex flowmeter in accordance with claim 16, provided with a computation means to control the output based on the incorporated program when the said decision signal is input.

〈Figure 34〉

# Fig.1 (Prior Art)

EP 0 800 061 A2

Fig.2 (Prior Art)

Fig.3

18

Fig.4 (A)   DS 2   CL 2

$t_1$

Fig.4 (B)   Su 3

Fig.4 (C)   Su 4

Fig.4 (D)   Sp 1

Fig.4 (E)   Su 5

Fig.5 (A) $CL_1$

Fig.5 (B) $S_{R3}$

Fig.5 (C) $S_{R4}$

Fig.5 (D) $S_{R5}$

Fig.5 (E) $S_{R6}$

Fig.6 (A) $S_{R3}$

Fig.6 (B) $1/2 S_{R3}$

Fig.6 (C) $S_{U5}$

Fig.6 (D) $1/2 S_{U5}$

Fig.6 (E) $S_{\alpha 1}$

Fig.7
(A)

Reference Phase

$S_{R3}$
(0)

$S_{a1}$

1

0

$-2\pi$    0    $2\pi$    $4\pi$    Phase $\phi$

$S_{U5}$

Fig.7
(B)

$S_{R4}$
$(\pi/2)$

$S_{b1}$

1

0

$-2\pi$    0    $2\pi$    $4\pi$

$S_{U5}$

Fig.7
(C)

$S_{R5}$
$(\pi)$

$S_{c1}$

1

0

$-2\pi$    0    $2\pi$    $4\pi$

$S_{U5}$

Fig.7
(D)

$S_{R6}$
$(3\pi/2)$

$S_{d1}$

1

0

$-2\pi$    0    $2\pi$    $4\pi$

$S_{U5}$

Fig.8
(A)

Fig.8
(B)

Fig.8
(C)

Fig.9 (A)

Fig.9 (B)

Fig.9 (C)

Fig.9 (D)

Fig.9 (E)

Fig.9 (F)

Fig.9 (G)

# Fig.10

# Fig.11

Fig.12 (A)  $S_{R3}$

Fig.12 (B)  $S_{R4}$

Fig.12 (C)  $S_{R5}$

Fig.12 (D)  $S_{R6}$

Fig.12 (E)  $S_{U5}(0)$

L H H L  $\Rightarrow X_n=0$

Fig.12 (F)  $S_{U5}(1)$

L L H H  $\Rightarrow X_n=1$

Fig.12 (G)  $S_{U5}(2)$

H L L H  $\Rightarrow X_n=2$

Fig.12 (H)  $S_{U5}(3)$

H H L L  $\Rightarrow X_n=3$

$S_{Sa}$  $S_{Sb}$  $S_{Sc}$  $S_{Sd}$

Fig.12 (I)  Sequence | Input Decision | Output Selection | Phase Detection(Smoothing)

Holding Time | Holding Time

# Fig.13

# Fig.14

$$y = X_n - Y_{n-1}$$ Step 1     35d

$$x = X_n - X_{n-1}$$ Step 2

YES   $x = 0$   Step 3

Step 4   NO

$x = +1$   YES

Step 7   NO

$x = -1$   YES

Step 8     Step 5     35c

NO    NO   $y = -1$   NO   $y = 0$

YES      YES

Step 10   $$Y_n = Y_{n-1}$$    $$Y_n = Y_{n-1} - 1$$    $$Y_n = Y_{n-1} + 1$$     35e

Step 9     Step 6

Step 11   $$X_{n-1} = X_n$$     35a

Step 12   $$Y_{n-1} = Y_n$$     35b

# Fig.15

EP 0 800 061 A2

Fig.16

Fig.17

EP 0 800 061 A2

# Fig.18

EP 0 800 061 A2

Fig.19 (A)    DS 2'

Fig.19 (B)    Su 3'

Fig.19 (C)    Sp 1'

# Fig.20

EP 0 800 061 A2

# Fig.21

# Fig.22
## (A)

TG1

# Fig.22
## (B)

DS2

t1

# Fig.22
## (C)

Su4'

# Fig.22
## (D)

PS

Sp1'

# Fig.23

EP 0 800 061 A2

# Fig.24

# Fig.25

# Fig.26

# Fig.27

EP 0 800 061 A2

# Fig.28

# Fig.29
## (A)

$V_D$

Switching

# Fig.29
## (B)

$V_{DO}$

No Measurement

# Fig.29
## (C)

$V_{D1}$

No Measurement

# Fig.29
## (D)

SD

# Fig.30 (A)

Vortex Signal

$Y_{n-1}=0$    $Y_n=1$

$\longrightarrow$ Phase of Receiver Signal($X_n$)

# Fig.30 (B)

$Y_n=1$

$Y_{n-1}=0$

EP 0 800 061 A2

# Fig.31

EP 0 800 061 A2

# Fig.32

Start

(a) Read $Y_n$

(b) Read $X_n$

(c) $Y_n - X_n = $ 2 or 3 — YES → (d) Not Output FS

NO

(e) Predetermined Term Pass ? — NO

YES

(f) $Y_n - X_n$ ? — $Y_n - X_n = 0$ → (h) Output FS and, $Y_n - 1$

$Y_n - X_n = 1$

(g) Output FS and, $Y_n + 1$

Fig.33 (A)  DS 2

Fig.33 (B)  Su 3

Fig.33 (C)  Su 4

Fig.33 (D)  Sp 1

Fig.33 (E)  Su 5

$t_1$

G

EP 0 800 061 A2

Fig.34

EP 0 800 061 A2

# Fig.35

# Fig.36